# EUROPÄISCHE PATENTSCHRIFT

(11) **EP 4 068 014 B1**
(45) Veröffentlichungstag und Bekanntmachung des Hinweises auf die Patenterteilung: **08.11.2023**
(21) Anmeldenummer: 21166071.7
(22) Anmeldetag: 30.03.2021
(51) Int. Cl.: G05B 19/042, G06F 11/20

(54) **HOCHVERFÜGBARE CLOUD-BASIERTE AUTOMATISIERUNGSLÖSUNG MIT OPTIMIERTEN ÜBERTRAGUNGSZEITEN**
HIGH AVAILABILITY CLOUD-BASED AUTOMATION SOLUTION WITH OPTIMIZED TRANSMISSION TIMES
SOLUTION D'AUTOMATISATION EN NUAGE HAUTEMENT DISPONIBLE À TEMPS DE TRANSMISSION OPTIMISÉS

(43) Veröffentlichungstag der Anmeldung: 05.10.2022
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)
(74) Vertreter: Siemens Patent Attorneys

(56) Entgegenhaltungen:
- EP-A1- 2 657 797
- EP-A1- 3 547 618
- EP-A1- 3 770 704
- US-A1- 2020 280 615

## Beschreibung

Die Erfindung betrifft ein Verfahren zum Betreiben eines Automatisierungssystems, umfassend zumindest eine zu steuernde, an einem Anlagenstandort aufgestellte Automatisierungsanlage sowie wenigstens zwei zur Steuerung der Automatisierungsanlage eingerichtete, einen Teil einer Cloud-Computing-Struktur bildende Steuerungsapplikationen, deren Rechenressourcen an unterschiedlichen Standorten vorgesehen sind und die über ein Netzwerk, das eine Vielzahl von Kommunikationsknotenpunkten und diese miteinander verbindende Kommunikationspfade aufweist, untereinander und mit der Automatisierungsanlage kommunikationstechnisch verbunden sind, wobei eine erste Steuerungsapplikation der Steuerungsapplikationen als Primary und wenigstens eine zweite Steuerungsapplikation der Steuerungsapplikationen als Backup arbeitet.

Ferner betrifft die Erfindung ein Automatisierungssystem zur Durchführung eines derartigen Verfahrens sowie ein redundantes, cloud-basiertes Steuerungssystem.

In jüngster Vergangenheit gab es einige Versuche, Steuerungsfunktionen für eine Automatisierungsanlage auf Basis von Rechenressourcen in einer Cloud-Umgebung zum Ablauf zu bringen. Das Steuerprogramm zur Steuerung der Automatisierungsanlage wird dabei mittels einer Steuerungsapplikation auf einem Applikations-Server abgearbeitet und kommuniziert über das globale Netzwerk (Internet) mit einer lokalen Peripherieeinheit der Automatisierungsanlage.

Diese Vorgehensweise bringt einige Vorteile mit sich, z.B. die problemlose Skalierbarkeit der Steuerungs-Funktionalität bei geänderten Anforderungen an die Steuerungsaufgabe.

Darüber hinaus lassen sich Updates sowohl der Anwendersoftware (insbesondere des Steuerprogramms) als auch der Systemsoftware (insbesondere der Steuerungsapplikation) leichter bewerkstelligen.

Die großen Herausforderungen dabei sind die derzeit schlechte Zuverlässigkeit von Cloud-basierten Diensten sowie die mangelnde Echtzeitfähigkeit der Kommunikation zwischen Applikations-Servern und Peripherieeinheiten. Dies führt zu stark schwankenden Reaktionszeiten und beschränkt dadurch die Einsatzmöglichkeiten der Cloud-basierten Automatisierung.

Wegen der schlechten Verfügbarkeit von Cloud-basierten Diensten sowie der mangelnden Echtzeitfähigkeit im globalen Netzwerk (Internet) werden heute vor Ort installierte Automatisierungssysteme mit dedizierter Hardware eingesetzt.

Aus der EP 2657797 A1 sind ein redundantes, ein erstes und ein zweites Teilsystem umfassendes Automatisierungssystem sowie ein Verfahren zum Betreiben eines derartigen Automatisierungssystems bekannt, wobei die Teilsysteme während der Steuerung eines technischen Prozesses jeweils ein Steuerprogramm parallel verarbeiten, wobei eines dieser Teilsysteme als Master und das andere Teilsystem als Slave arbeitet und wobei für den Fall, dass der Master ausfällt, der Slave die Funktion des Masters übernimmt.

Aus der EP 2667269 A1 sind ein mindestens zwei Teilsysteme aufweisendes Automatisierungssystem sowie ein Verfahren zum Betreiben eines derartigen Automatisierungssystems bekannt, wobei die Teilsysteme jeweils mit einem Steuerprogramm versehen sind, wobei zum Überführen der Prozesssteuerung von einem Solobetrieb eines der Teilsysteme in einen redundanten Steuerbetrieb mit einem anderen der Teilsysteme relevante Daten des einen Teilsystems dem anderen Teilsystem im Rahmen einer Aufdat-Phase des Automatisierungssystems übertragen werden.

Aus der US2020280615A1 ist ein Verfahren zum Bereitstellen von Redundanz in einem netzwerkzentrierten Prozesssteuerungssystem bekannt, wobei mindestens ein Knoten mindestens einen Steuerungsdienst sowie mindestens einen Middleware-Dienst zum Kommunizieren in dem Prozesssteuerungssystem umfasst, wobei der Steuerungsdienst und der Middleware-Dienst jeweils als separat ausführbarer, in einem separaten Betriebssystem laufender Prozess, der von einem Echtzeitbetriebssystem bereitgestellt wird, implementiert sind. Dabei fungiert ein erster Steuerdienst in einem ersten Knoten, der über einen ersten Middleware-Dienst kommuniziert und eine erste Steuerfunktion implementiert, als ein aktiver Steuerdienst für die erste Steuerfunktion und ein zweiter Steuerdienst, der über einen zweiten Middleware-Dienst kommuniziert und die erste Steuerfunktion implementiert, als Standby-Steuerdienst für die erste Steuerfunktion.

Aus der EP3547618A1 ist eine Transport- bzw. Vermittlungsfunktionseinheit eines Kommunikationsgeräts bekannt, die unter Verwendung zumindest einer einem Primär-Steuerungsgerät bzw. einem Sekundär-Steuerungsgerät zugeordneten Kommunikationsnetzadresse zwei Kommunikationsverbindungen zu einer ausfallgesicherten Steuerungseinheit aufbaut, die das Primär-Steuerungsgerät und das Sekundär-Steuerungsgerät umfasst. Über eine erste Kommunikationsverbindung übermittelte Daten werden vom Primär-Steuerungsgerät über eine erste Synchronisationsverbindung an das Sekundär-Steuerungsgerät weitergeleitet werden. Dementsprechend werden über eine zweite Kommunikationsverbindung übermittelte Daten vom Sekundär-Steuerungsgerät über eine zweite Synchronisationsverbindung an das Primär-Steuerungsgerät weitergeleitet.

Eine Aufgabe der vorliegenden Erfindung ist es, die EchtzeitFähigkeit bei der Steuerung einer Automatisierungsanlage auf Basis von Rechenressourcen in einer Cloud-Umgebung zu verbessern.

Diese Aufgabe wird gelöst durch ein Verfahren mit den in Patentanspruch 1 angegebenen Verfahrensschritten, nämlich ein Verfahren zum Betreiben eines Automatisierungssystems, umfassend zumindest eine zu steuernde, an einem Anlagenstandort aufgestellte Automatisierungsanlage sowie wenigstens zwei zur Steuerung der Automatisierungsanlage eingerichtete, einen Teil einer Cloud-Computing-Struktur bildende Steuerungsapplikationen, deren Rechenressourcen an unterschiedlichen Standorten vorgesehen sind und die über ein Netzwerk, das eine Vielzahl von Kommunikationsknotenpunkten und diese miteinander verbindende Kommunikationspfade aufweist, untereinander und mit der Automatisierungsanlage kommunikationstechnisch verbunden sind, wobei eine erste Steuerungsapplikation der Steuerungsapplikationen als Primary und wenigstens eine zweite Steuerungsapplikation der Steuerungsapplikationen als Backup arbeitet, wobei die Primary über das Netzwerk ein von der Automatisierungsanlage ausgehendes, einen Eingangswert der Automatisierungsanlage umfassendes erstes Datenpaket empfängt, wobei die Primary den Eingangswert gemäß bestimmter, von den Steuerungsapplikationen umfassten, wenigstens im Wesentlichen in der Primary und der Backup in identischer Form vorliegenden Programmanweisungen eines Steuerprogramms verarbeitet und daraus einen Ausgangswert für einen von der Automatisierungsanlage umfassten Aktor erzeugt, wobei ein zweites, den Eingangswert umfassendes Datenpaket über das Netzwerk an die Backup übertragen wird, wobei eine Freigabe von der Primary an die Backup übermittelt wird, wobei aufgrund der Freigabe Programmanweisungen des mittels der Backup zu verarbeitenden Steuerprogramms verarbeitet werden, welche den bereits verarbeiteten, bestimmten Programmanweisungen des mittels der Primary zu verarbeitenden Steuerprogramms entsprechen, und die Backup daraus ebenfalls den Ausgangswert für den von der Automatisierungsanlage umfassten Aktor erzeugt, wobei den jeweilige Ausgangswert umfassende dritte Datenpakete sowohl von der Primary als auch von der Backup an die Automatisierungsanlage gesendet werden und wobei das zuerst an der Automatisierungsanlage eintreffende dritte Datenpaket zur Steuerung des Aktors verwendet wird.

Diese Vorgehensweise bietet den Vorteil, dass bei der erfindungsgemäßen Cloud-Computing-Struktur in Form eines redundant ausgebildeten (redundaten), cloud-basierten Steuerungssystems mehrere Steuerungsapplikationen das Steuerprogramm nahezu zeitgleich abarbeiten und entsprechende Steueranweisungen an die Automatisierungsanlage senden. Lange Übertragungszeiten einzelner Rechenressourcen wirken sich daher nicht negativ auf die Steuerung der Automatisierungsanlage aus.

Vorteilhaft werden während eines Betriebs des Automatisierungssystems fortlaufend von der Automatisierungsanlage erste Datenpakete mit dem jeweils aktuellen Eingangswert erzeugt und an die Primary übermittelt, zweite Datenpakete mit dem Eingangswert von der Automatisierungsanlage oder der Primary erzeugt und an die Backup übermittelt und von der Primary und der Backup dritte Datenpakete mit dem jeweils aktuellen Ausgangswert erzeugt und an die Automatisierungsanlage übermittelt.

Das Erzeugen und Auslesen der ersten Datenpakete kann von der Automatisierungsanlage initiiert sein. Vorteilhaft sendet die Peripherieeinheit die Eingangswerte über alle verfügbaren logischen Verbindungen sowohl an die Primary als auch an alle Backups, z.B. entsprechend dem PROFINET Standard für Systemredundanz, insbesondere per Multicast.

Vorzugsweise sendet die Peripherieeinheit zyklisch - insbesondere unter Rückgriff auf den PROFINET Standard - aktuelle Eingangsdaten an die Primary. Die Primary speichert die Daten in einem Puffer. In diesem Puffer werden die Daten fortlaufend von der Peripherieeinheit erneuert und dabei überschrieben. Die Primary greift bei Bedarf auf diesen Puffer zu.

Alternativ werden die Daten seitens der Primary aus der Automatisierungsanlage ausgelesen. Dies bedeutet, die Primary initiiert durch entsprechende Lese-Zugriffe das Erzeugen und Aussenden der ersten Datenpakete seitens der Automatisierungsanlage.

Bei dem Eingangswert kann es sich um einen beliebigen Wert aus der Automatisierungsanlage handeln, der von einer Steuerungsapplikation bei der Steuerung der Automatisierungsanlage berücksichtigt wird. Beispielsweise kann es sich um einen von einem Sensor erfassten Ist-Wert bzw. Sensorwert handeln. Der Eingangswert kann aber auch aus einem oder mehreren Sensorwerten, beispielsweise in Folge einer in der Automatisierungsanlage durchgeführten Signalverarbeitung, hervorgehen. Weiterhin kann der Eingangswert auch einen Zustand der Automatisierungsanlage betreffen oder aus einem derartigen Zustand hervorgehen. Auch der Wert eines bestimmten Parameters oder einer bestimmten Variablen fällt unter die Bezeichnung "Eingangswert".

Der Eingangswert wird bei der Abarbeitung des Steuerprogramms berücksichtigt und ein von dem Eingangswert abhängiger Ausgangswert für einen von der Automatisierungsanlage umfassten Aktor erzeugt. Insbesondere handelt es sich bei dem Ausgangswert um eine Steueranweisung für den Aktor. So kann mittels des cloud-basierten Steuerungssystems eine Reglerstruktur realisiert werden, bei der mittels des Sensors ein Eingangswert in Form eines Ist-Wertes erfasst wird, dieser Ist-Wert von dem Steuerungssystem mit einem Sollwert verglichen wird und daraus ein Ausgangswert in Form einer Stellgröße für den Aktor erzeugt und dem Aktor zugeführt wird.

Bei einem Aktor im Sinne der Erfindung handelt es sich allgemein um eine Baueinheit, die eine Aktion in dem Automatisierungssystem ausführt. Insbesondere handelt es sich dabei um ein Stellglied, das eine Bewegung einer Komponente der Automatisierungsanlage oder eine Veränderung einer physikalischen Größe wie Druck oder Temperatur hervorruft. Beispielsweise handelt es sich bei dem Aktor um einen Antrieb, ein Ventil oder einen Schalter.

Die Bezeichnung als "Eingangswert" bzw. "Ausgangswert" rührt daher, da es sich aus Sicht des Steuerungssystems um Eingangs- bzw. Ausgangswerte handelt.

Selbstverständlich kann ein Datenpaket auch mehr als einen Eingangswert oder mehr als einen Ausgangswert enthalten, z.B. wenn die Automatisierungsanlage eine Maschine mit mehreren Achsen umfasst, die im Verbund verfahren werden, die Ist-Werte aller Achsen bzw. die Steueranweisungen für alle Achsen. In der Regel ist also von einem ersten Datenpaket eine Vielzahl an Ist- bzw. Eingangswerten aus der Automatisierungsanlage und von einem dritten Datenpaket eine Vielzahl an Ausgangswerten bzw. Stell- oder Steuergrößen umfasst.

Die Erfindung bietet - neben den verkürzten Antwortzeiten - weiterhin den Vorteil, dass auch komplexe Steuerfunktionen und Steuerfunktionen, die sich über einen langen Zeitraum erstrecken, mittels des Automatisierungssystems ausgeführt werden können. Insgesamt verbessert sich die Verfügbarkeit des erfindungsgemäßen Steuerungssystems gegenüber einer herkömmlichen cloud-basierten Steuerung.

Bei einer Ausgestaltung der Erfindung wird das zweite, den (aktuellen) Eingangswert umfassende Datenpaket von der Primary über das Netzwerk an die Backup übertragen. Die Primary hat dadurch die Kontrolle darüber, welche Datenpakete an die Backup übertragen werden.

Üblicherweise wird die Cloud-Computing-Struktur nicht nur eine Backup sondern eine Vielzahl an Backups umfassen. Die obigen sowie die nachfolgenden Ausführungen in Bezug auf "die Backup" gelten daher analog für alle Backups der Cloud-Computing-Struktur.

Der Primary obliegt in der Cloud-Computing-Struktur die Aufgabe der Synchronisation der einzelnen Teilnehmer. Eine Möglichkeit zum Erreichen dieser Synchronisation liegt darin, dass die Primary den aktuellen Eingangswert möglichst zeitgleich mittels zweiter Datenpakete an alle Backups sendet.

Bei einer alternativen Ausgestaltung der Erfindung wird das zweite, den Eingangswert umfassende Datenpaket direkt, also ohne den Weg über die Primary, von der Automatisierungsanlage über das Netzwerk an die Backup übertragen.

Insbesondere sind das zu einem bestimmten Eingangswert gehörende erste und zweite Datenpaket nahezu identisch. Sie unterscheiden sich dann gegebenenfalls nur in der bzw. den Empfänger-Netzwerkadressen.

Diese Ausgestaltung bringt mitunter einen zeitlichen Vorteil gegenüber der zuvor genannten. Allerdings muss dann die Synchronisation auf einem anderen Weg erfolgen, beispielsweise über Freigabe-Signale, wie nachfolgend noch genauer erläutert wird.

Die ersten Datenpakete zeichnen sich also dadurch aus, dass sie jeweils von der Automatisierungsanlage erzeugt werden, den zum Zeitpunkt des Erzeugens aktuellen Eingangswert umfassen und von der Automatisierungsanlage an die Primary übermittelt werden.

Die zweiten Datenpakete zeichnen sich dadurch aus, dass sie entweder von der Automatisierungsanlage oder der Primary erzeugt werden, den zum Sende-Zeitpunkt aktuellen Eingangswert umfassen und an die Backup übermittelt werden.

Die dritten Datenpakete zeichnen sich dadurch aus, dass sie sowohl von der Primary als auch der Backup erzeugt werden, den zum Sende-Zeitpunkt aktuellen Ausgangswert, insbesondere die aktuelle Steueranweisung bzw. die aktuellen Steueranweisungen umfassen und an die Automatisierungsanlage übermittelt werden.

Sowohl die Primary als auch die Backup bzw. die Backups werden nachfolgend auch als "Teilsystem" bzw. "Teilsysteme" bezeichnet.

Nachfolgende wird die Synchronisation zwischen der Primary und der Backup (bzw. den Backups) mittels Freigaben näher beschrieben. Wie später noch genauer erläutert wird, bedeutet "Synchronisation" im Zusammenhang mit der Erfindung nicht, dass beide Teilsysteme (Primary und Backup) zeitgleich exakt die gleichen Programmschritte ausführen. Synchronisation ist vielmehr dahingehend zu verstehen, dass die beiden Teilsysteme die Programmverarbeitung nicht losgelöst bzw. unabhängig voneinander durchführen, sondern dass eine nachfolgend noch genauer erläuterte Kopplung der Teilsysteme bei der Programmverarbeitung besteht. "Synchron" im Sinne der Erfindung kann man daher auch als "pfadsynchron" bezeichnen, womit ausgedrückt werden soll, dass alle synchronisierten Teilsysteme die gleichen Programmpfade durchlaufen müssen, dies jedoch nicht exakt gleichzeitig.

Eine Ausgestaltung des erfindungsgemäßen Verfahrens zum Betreiben eines redundanten, mit wenigstens einem ersten und einem zweiten Teilsystem versehenen Automatisierungssystems, welche während der Steuerung einer Automatisierungsanlage jeweils ein Steuerprogramm verarbeiten, wobei eines dieser Teilsysteme als Primary und das andere Teilsystem als Backup arbeitet, zeichnet sich dadurch aus, dass
- Verarbeitungsabschnitte des mittels der Primary zu verarbeitenden Steuerprogramms verarbeitet werden,
- nach dem Auftreten eines Ereignisses zu einem Zeitpunkt des Auftretens einer auf das Auftreten dieses Ereignisses folgenden Unterbrechungsstelle der Backup eine Freigabe durch die Primary übermittelt wird und die Primary ihr zu verarbeitendes Steuerprogramm weiter verarbeitet, und
- die Freigabe der Backup anzeigt, bis zu welchem Verarbeitungsabschnitt die Backup ihr Steuerprogramm verarbeiten darf.

Bei einer Ausgestaltung der Erfindung werden aufgrund der Freigabe die Verarbeitungsabschnitte des mittels der Backup zu verarbeitenden Steuerprogramms verarbeitet, welche den bereits verarbeiteten Verarbeitungsabschnitten des mittels der Primary zu verarbeitenden Steuerprogramms von einer vorherigen Freigabe bis zu der Freigabe entsprechen.

Eine alternative Ausgestaltung der Erfindung sieht vor, dass die Primary der Backup eine Freigabe zur Verarbeitung eines bestimmten Abschnitts des Steuerprogramms, der auch von der Primary verarbeitet wird, erteilt, jedoch bereits bevor die Primary die Verarbeitung dieses Teils des Steuerprogramms abgeschlossen hat. Diese Vorgehensweise ist insbesondere dann sinnvoll, wenn bereits vor Abschluss der Verarbeitung eines bestimmten Abschnitts des Steuerprogramms durch die Primary klar ist, welche Verarbeitungsschritte dieser Teil umfassen wird. Die Backup muss damit nicht auf den Abschluss der Verarbeitung dieser Verarbeitungsschritte durch die Primary warten und die Verarbeitung des jeweiligen Abschnitts des Steuerprogramms kann zumindest näherungsweise parallel und zeitgleich in den Teilsystemen erfolgen.

Vorteilhaft bei den aufgezeigten Vorgehensweisen ist, dass die Primary nicht (aktiv) auf eine Antwort der Backup warten muss, um seine Programmverarbeitung fortsetzen zu können. Die Übertragung aller relevanten Informationen von der Primary zu der Backup erfolgt zeitlich asynchron. Dadurch wird die Verarbeitungsleistung der Primary von der für eine Ereignissynchronisation zur Verfügung stehenden Kommunikationsbandbreite entkoppelt, was insbesondere im Hinblick auf das zunehmende Ungleichgewicht zwischen der Steigerung der Verarbeitungsleistung der Prozessoren einerseits und der Steigerung der Kommunikationsleistung andererseits von Bedeutung ist, denn die Kommunikationsleistung kann gewöhnlich nicht mit der zunehmenden Verarbeitungsleistung Schritt halten.

Im Hinblick auf die Synchronisation der Programmverarbeitung auf den beiden Teilsystemen bietet die Erfindung den Vorteil, dass auf eine zeitlich synchrone Kommunikation zwischen den Teilnehmern verzichtet werden kann.

Die Synchronisation der beiden Teilsysteme nach dem Auftreten eines Ereignisses erfolgt synchron derart, dass sowohl die Primary als auch die Backup aufgrund dieses Ereignisses gleiche Programmpfade durchlaufen, wobei die Durchläufe zeitlich asynchron erfolgen. Dies bedeutet, dass die Primary im Hinblick auf die Programmver- bzw. -bearbeitung der Backup zeitlich vorausläuft bzw. die Backup der Primary zeitlich nachläuft. Unter einem "Nachlauf" bzw. "Vorauslauf" wird in diesem Zusammenhang die zeitliche Differenz zwischen dem Beginn der Verarbeitung der Verarbeitungsabschnitte durch die Primary und dem Beginn der Verarbeitung der Verarbeitungsabschnitte durch die Backup, was dem Zeitpunkt des Auftretens des Freigabesignals in der Backup entspricht, verstanden.

Aufgrund der zeitlich asynchronen Kommunikation zwischen der Primary und der Backup ist es möglich, auch langsame Kommunikationsverbindungen für den Aufbau eines redundanten Automatisierungssystems zu nutzen. Dies bedeutet, dass auch eine an sich im Hinblick auf die Übertragungsbandbreite oder Antwortzeit schlechte Kommunikationsverbindung oder auch eine Kommunikationsverbindung vorgesehen werden kann, die auch von anderen Kommunikationsteilnehmern genutzt wird und damit den beiden Teilnehmern nicht exklusiv für Synchronisationszwecke zur Verfügung steht. Auf eine separate physikalische Synchronisationsverbindung kann daher verzichtet werden. Dies ist essenziell für eine internet-basierte Cloud-Umgebung, in der es keine exklusiven Verbindungen gibt.

Ferner können auch große Distanzen zwischen den beiden Teilnehmern überwunden werden, ohne die Systemleistung durch hohe Signallaufzeiten oder hohe Latenzzeiten allzu sehr zu verschlechtern. Insbesondere können die Primary und die Backup sowohl zur Datenübertragung als auch zur Synchronisation lediglich über das Internet miteinander verbunden sein.

In einer Ausgestaltung der Erfindung ist vorgesehen, dass zum Zeitpunkt der Übermittlung der aktuellen Freigaben der Backup mittels der Primary auch Anlageneingangswerte übermittelt werden. Die für die Backup relevanten Informationen werden zunächst zusammengefasst bzw. gesammelt und schließlich der Backup übermittelt. Dies bedeutet im Unterschied zu bekannten zeitlichen Synchronisationsverfahren, im Rahmen derer relevante Informationen gleich zur Backup gesendet werden müssen, einen deutlich verringerten "Verwaltungsaufwand" sowohl für die Primary als auch für die Backup.

In einer weiteren Ausgestaltung der Erfindung ist vorgesehen, dass durch die Backup nach der Bearbeitung der jeweiligen Verarbeitungsabschnitte die jeweilige Freigabe der Primary quittiert wird. Die Anzahl der unquittierten Freigaben weist die Primary auf den aktuellen Nachlauf der Backup hin, wodurch die Primary geeignete Maßnahmen ergreifen kann, um den zeitlichen Nachlauf nicht zu groß werden zu lassen.

Wie bereits zuvor genannt, umfasst eine bevorzugte Ausgestaltung der Erfindung eine Vielzahl an als Backups arbeitende Steuerungsapplikationen, deren Rechenressourcen an unterschiedlichen Standorten vorgesehen sind und die über das Netzwerk mit der Automatisierungsanlage sowie der Primary kommunikationstechnisch verbunden sind, die von dem redundanten Automatisierungssystems umfasst sind und erste Datenpakete von der Automatisierungsanlage oder der Primary empfangen und dritte Datenpakete erzeugen und an die Automatisierungsanlage übermitteln.

Mit jeder neuen Backup, die unterschiedliche Netzwerkpfade nutzt, verringert sich potenziell die Wahrscheinlichkeit für große Übertragungszeiten. Mit jeder weiteren Backup erhöht sich jedoch auch die Belastung des Netzwerks, was tendenziell zu größeren Übertragungszeiten führt. Daher kann ab einer bestimmten Anzahl an Backups mit jeder weiteren Backup nur noch ein geringer Vorteil erzielt werden. Es ist daher nur bedingt sinnvoll, eine sehr große Anzahl an Backups vorzusehen.

Die Bearbeitung der an die Automatisierungsanlage übermittelten dritten Datenpakete und insbesondere die Reihenfolge der Bearbeitung erfolgt vorteilhaft in Abhängigkeit sogenannter Sequenznummern. Die Verwendung von Sequenznummern ist bei der Übertragung von Daten über Netzwerke üblich und hinlänglich bekannt.

Insbesondere wird zu jedem von der Automatisierungsanlage zu der Primary übertragenen, einen Ist-Wert enthaltenden ersten Datenpaket - seitens der Automatisierungsanlage oder seitens der Primary - eine eindeutige Sequenznummer vergeben. Insbesondere wird die Sequenznummer ausgehend von einem Startwert mit jedem neuen Ist-Wert bzw. Datenpaket aktualisiert, insbesondere um eins erhöht oder verringert. Es sind jedoch auch andere Verfahren (neben der Erhöhung oder der Verringerung jeweils um den Wert eins) bekannt, um eine eindeutige Reihenfolge der Sequenznummern zu bestimmen.

Die jeweilige Sequenznummer kann von den ersten und/oder zweiten Datenpaketen umfasst sein und so von der Automatisierungsanlage oder der Primary auch an die Backup übertragen werden. Es ist jedoch auch möglich, dass die Backup eigenmächtig den aktuellen Wert der Sequenznummern mit jedem neuen Ist-Wert bzw. jedem neu eintreffenden Datenpaket entsprechend anpasst, insbesondere um eins erhöht bzw. verringert. Bei dieser Variante bedarf es keiner Übertragung der Sequenznummern ausgehend von der Automatisierungsanlage oder der Primary an die Backup.

Bei einer Ausgestaltung der Erfindung werden die von der Automatisierungsanlage ausgehenden ersten Datenpakete jeweils mit einer eindeutigen Sequenznummer versehen und die Primary sowie die Backup versehen die zu einem ersten Datenpaket korrespondierenden dritten Datenpakete jeweils mit einer zu der Sequenznummer des ersten Datenpaketes korrespondierenden, insbesondere auf allen Backups identischen Sequenznummer.

Allen Varianten ist gemeinsam, dass zu jedem Eingangswert sowohl in der Primary als auch in der Backup eine eindeutige, identische Sequenznummer existiert, die von dem jeweiligen, die betreffende Steueranweisung enthaltenden dritten Datenpaket, welches von der Primary bzw. der Backup an die Automatisierungsanlage gesendet wird, umfasst ist.

Die Automatisierungsanlage erkennt sodann anhand der von dem jeweiligen an die Automatisierungsanlage übermittelten dritten Datenpaket umfassten Sequenznummer, welches der zu einem bestimmten ersten Datenpaket und damit zu einem bestimmten Eingangswert korrespondierenden, an die Automatisierungsanlage übermittelten dritten Datenpakete zuerst an der Automatisierungsanlage eintrifft und verarbeitet dieses Datenpaket und insbesondere den davon umfassten Ausgangswert weiter.

Danach an der Automatisierungsanlage eintreffende dritte Datenpakete mit der betreffenden Sequenznummer werden ignoriert.

So können anhand der Sequenznummer zu einem bestimmten von der Automatisierungsanlage ausgehenden ersten Datenpaket mit einem bestimmten Eingangswert eindeutig das zuerst an der Automatisierungsanlage eintreffende dritte Datenpaket mit Ausgangswerten bzw. Steueranweisungen, die auf genau diesem bestimmten Eingangswert beruhen, identifiziert und die betreffenden Steueranweisungen in der Automatisierungsanlage ausgeführt bzw. umgesetzt werden.

Dadurch wird das jeweils schnellste Datenpaket bzw. der davon umfasste Ausgangswert bzw. die davon umfasste Steueranweisung am Ausgang der Peripherieeinheit zum Aktor wirksam. Die Übertragungszeit des schnellsten Datenpakets folgt in dem redundanten Steuerungssystem einer anderen Verteilungsfunktion, bei der kürzere Übertragungszeiten wahrscheinlicher sind, als dies bei nur einer einzigen im Netzwerk vorhandenen Steuerung der Fall wäre.

Bei einer Ausgestaltung der Erfindung erfolgt eine Übertragung der ersten und/oder zweiten und/oder dritten Datenpakete zwischen den Komponenten des Automatisierungssystems gemäß dem PROFINET-Standard. Dieser Standard ist in der Industrie weit verbreitet und erlaubt bereits die Anbindung bzw. logische Verbindung mehrerer Steuerungseinheiten mit einem Gerät bzw. einer Anlage.

Bei einer Ausgestaltung der Erfindung wird wenigstens eine weitere, als weitere Backup arbeitende Steuerungsapplikation im Rahmen einer sogenannten "Aufdat-Phase" in das Automatisierungssystem eingebunden. Auch hier gilt wieder, dass das nachfolgend für die Einbindung einer weiteren Backup in das Cloud-Computing-System aufgezeigte Verfahren - nachfolgend auch als "Aufdaten" bezeichnet, analog für die Einbindung weiterer, insbesondere beliebig vieler Backups angewendet werden kann.

Eine Ausgestaltung des erfindungsgemäßen Verfahrens zum Betreiben eines ein erstes Teilsystem (Primary) und wenigstens ein zweites Teilsystem (Backup) aufweisenden Automatisierungssystems, die jeweils mit einem Steuerprogramm versehen sind, wobei zum Einbinden eines weiteren, ebenfalls mit dem Steuerprogramm versehenen Teilsystems (weitere Backup) in das Automatisierungssystem relevante Daten des ersten Teilsystems dem weiteren Teilsystem im Rahmen einer Aufdat-Phase des Automatisierungssystems übertragen werden, zeichnet sich dadurch aus, dass
- zu Beginn der Aufdat-Phase durch das erste Teilsystem eine lokale Kopie seiner relevanten Daten (Parameter, Variablen, interne Zustände etc.) angelegt wird,
- während der Aufdat-Phase dem weiteren Teilsystem die Kopie durch das erste Teilsystem, insbesondere fragmentiert, übermittelt wird, und Anlageneingangswerte sowie Freigaben des ersten Teilsystems zwischengespeichert werden, wobei die Freigaben anzeigen, welche Verarbeitungsabschnitte des Steuerprogramms das erste Teilsystem bereits verarbeitet hat,
- nach der Übermittlung der Kopie freigegebene Verarbeitungsabschnitte des Steuerprogramms des weiteren Teilsystems, welche den Verarbeitungsabschnitten des Steuerprogramms des ersten Teilsystems entsprechen, unter Berücksichtigung der zwischengespeicherten Eingangswerte mittels des weiteren Teilsystems mit einem zeitlichen Nachlauf verarbeitet werden, wobei zur Verringerung des zeitlichen Nachlaufs der Verarbeitung, insbesondere auf einen vorgegeben Wert, die Verarbeitungsabschnitte des Steuerprogramms in dem weiteren Teilsystem relativ zur Verarbeitung der entsprechenden Verarbeitungsabschnitte des Steuerprogramms in dem ersten Teilsystem schneller verarbeitet werden.

Vorteilhaft werden die Anlageneingangswerte sowie Freigaben in dem ersten Teilsystem (der Primary) zwischengespeichert.

Durch diese Vorgehensweise wird erreicht, dass das weitere Teilsystem (die weitere Backup) in die Cloud-Computing-Struktur eingebunden wird und soweit mit dem ersten Teilsystem (der Primary) und den übrigen von der Cloud-Computing-Struktur umfassten Teilsystemen (Backups) synchronisiert wird, dass das von der weiteren Backup verarbeitete Steuerprogramm synchron zu den von den übrigen Backups jeweils verarbeiteten Steuerprogrammen verarbeitet wird. Wobei auch an dieser Stelle "synchron" wieder bedeutet, dass die einzelnen Verarbeitungsschritte der Steuerprogramme in den unterschiedlichen Backups und der Primary nicht absolut zeitgleich, sondern mit einem durch die Verwendung und Übermittlung von Freigaben bedingten Versatz verarbeitet werden.

Die beschriebene Vorgehensweise zur Einbindung eines weiteren Teilsystems in die Cloud-Computing-Struktur, bei der relevante Daten des ersten Teilsystems (der Primary) dem weiteren Teilsystem (einer weiteren Backup) im Rahmen einer Aufdat-Phase des Automatisierungssystems übertragen werden, kann analog auf eine Vielzahl weiterer Backups, die neu in das Automatisierungssystem eingebunden werden sollen, übertragen werden. Auch die neu in das Automatisierungssystem eingebundenen Backups werden sodann mittels der Freigaben durch die Primary fortlaufend mit den übrigen Teilsystemen des redundanten, cloud-basierten Steuerungssystems synchronisiert und erzeugen dritte Datenpakete, die an die Automatisierungsanlage gesendet werden.

Vorteilhaft ist, dass bei dieser Vorgehensweise beispielsweise auf einen aufwendigen "Dirty-Bit-Mechanismus" verzichtet werden kann. Zu Beginn der Aufdat-Phase erstellt das erste Teilsystem - die Primary - eine Kopie seiner relevanten Daten, die den internen Zustand der Primary zu Beginn dieser Aufdat-Phase repräsentieren, wobei diese Daten, insbesondere fragmentiert, dem "aufzudatenden" bzw. neu aufgeschalteten Teilsystem - der weiteren (bzw. "neuen") Backup - übertragen werden. Dieser interne Zustand wird im Wesentlichen durch statische und dynamische Daten, Datenbausteine, Anlagenein- und -ausgangswerte sowie Konfigurationsdaten bestimmt bzw. vorgegeben. Die neue Backup wird schließlich über die Freigaben schrittweise und zeitlich asynchron zur aktuellen Verarbeitung des Steuerprogramms durch die Primary an den internen Zustand der Primary herangeführt, wobei die neue Backup mit der Bearbeitung der Freigaben erst dann beginnt, wenn diese die Kopie vollständig erhalten hat. Die neue Backup durchläuft mit den relevanten Daten nach Maßgabe der Freigaben zeitlich verzögert die gleichen Programmpfade, die die Primary bereits durchlaufen hat. Dies bedeutet, dass die Primary im Hinblick auf die Programmver- bzw. -bearbeitung der Backup zeitlich vorausläuft bzw. die Backup der Primary zeitlich nachläuft. Unter einem "Nachlauf" bzw. "Vorauslauf" wird in diesem Zusammenhang auch an dieser Stelle die zeitliche Differenz zwischen dem Beginn der Verarbeitung der Verarbeitungsabschnitte durch die Primary und dem Beginn der Verarbeitung der entsprechenden Verarbeitungsabschnitte durch die Backup, was dem Zeitpunkt des Auftretens der Freigabe bzw. des Freigabesignals entspricht, verstanden. Ferner wird darauf hingewiesen, dass unter einem Programm sowohl ein Programm als solches, als auch ein Unterprogramm, ein Teil eines Programms, ein Teileprogramm, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Zu dem Zeitpunkt, zu dem die neue Backup den Nachlauf bzw. Rückstand aufgeholt hat oder dieser Nachlauf eine vorgebbare bzw. vorgegebene und als unkritisch angesehene Zeitspanne bzw. ein tolerierbares Maß unterschreitet, ist die Aufdat-Phase abgeschlossen und das Automatisierungssystem arbeitet ab diesem Zeitpunkt in einer redundanten Betriebsart mit einer erhöhten Anzahl an Backups.

Aufgrund der zeitlich asynchronen Kommunikation zwischen der Primary und der Backup während der Aufdat-Phase ist es möglich, auch langsame Kommunikationsverbindungen zu nutzen. Dies bedeutet, dass auch eine an sich im Hinblick auf die Übertragungsbandbreite oder Antwortzeit schlechte Kommunikationsverbindung oder auch eine Kommunikationsverbindung vorgesehen werden kann, die auch von anderen Kommunikationsteilnehmern genutzt wird und damit nicht exklusiv für den Ankoppeln- und Aufdatvorgang zur Verfügung steht. Auf eine separate Synchronisationsverbindung kann daher verzichtet werden. Ferner können auch große Distanzen zwischen den beiden Teilsystemen überwunden werden, ohne die Systemleistung durch hohe Signallaufzeiten oder hohe Latenzzeiten allzu sehr zu verschlechtern. Das erfindungsgemäße Automatisierungssystem ist daher bestens für eine Cloud-Computing-Struktur mit über das Internet miteinander vernetzten Teilsystemen geeignet.

In einer Ausgestaltung der Erfindung ist vorgesehen, dass die Anlageneingangswerte zusammen mit den Freigaben dem anderen Teilsystem übermittelt werden. Die für das andere Teilsystem relevanten Informationen werden zunächst zusammengefasst bzw. gesammelt und schließlich dem anderen Teilsystem übermittelt.

Dadurch wird der "Verwaltungsaufwand" für beide Teilsysteme verringert.

Vorzugsweise werden solange weitere Backups in das Automatisierungssystem eingebunden, insbesondere entsprechend der beschriebenen Vorgehensweise zum "Aufdaten", bis ein Abbruchkriterium erreicht ist.

Ein Abbruchkriterium kann beispielsweise eine vorgegebene oder vorgebbare maximale Anzahl vorhandener Backups in dem Automatisierungssystems sein, z.B. 100.

Ein anderes Abbruchkriterium kann die erwartete Verkürzung der Antwortzeiten betreffen, die eine weitere Backup in dem System bewirkt. So kann die Einbindung weiterer Backups dann gestoppt werden, wenn die durch die Einbindung der betreffenden weiteren Backup die erwartete Verkürzung der Antwortzeiten unterhalb eines bestimmten Schwellenwertes, z.B. unterhalb 1ms liegt. Der Schwellenwert ist insbesondere von der konkreten Anwendung abhängig. So können bei bestimmten Anwendungen auch Schwellenwerte von 10ms oder 100ms, oder nahezu beliebige andere Werte sinnvoll sein.

Bei einer Ausgestaltung der Erfindung wird anhand statistischer Methoden ermittelt, inwieweit die Einbindung einer weiteren Backup bzw. weiterer Backups in das Automatisierungssystem in dem Automatisierungssystem erreichbare Antwortzeiten reduziert und in Abhängigkeit des Ergebnisses dieser Ermittlung werden gegebenenfalls (automatisch) die weitere Backup bzw. die weiteren Backups in das Automatisierungssystem eingebunden.

Je weniger Backups das Automatisierungssystem umfasst, umso mehr tragen weitere Backups zu einer Verringerung der Übertragungszeiten bei. Ab einer bestimmten, von einer Vielzahl an Faktoren abhängigen Anzahl an Backups lassen sich jedoch kaum noch Verbesserungen erzielen. Durch den von jeder Backup erzeugten zusätzlichen Datenverkehr im Netzwerk kommt es sogar zu einem Punkt, ab dem zusätzliche Backups zu einer Verschlechterung der Übertragungszeiten führen. Diesen Zustand gilt es zu vermeiden.

Vorteilhaft wird das Steuerungssystem dynamisch rekonfiguriert. Dies bedeutet, dass nicht nur neue Backups in das System eingebunden, sondern auch wieder daraus entfernt werden können. So wird erreicht, dass bei schwankender Netzbelastung automatisch immer wieder die aus Sicht der Reaktionszeit optimale Anordnung ermittelt und konfiguriert werden kann. Die dynamische Rekonfiguration findet fortlaufend das mögliche Minimum für die Reaktionszeiten.

Der Vorteil dieser Lösung liegt darin, dass die Reaktionszeiten von Cloud-basierten Automatisierungslösungen reduziert bzw. optimiert werden können und damit deren Anwendung erst möglich wird. Die Netzbelastung wird durch das erfindungsgemäße Verfahren nur insoweit erhöht, wie es für die gegebenen Anforderungen notwendig ist.

Eine Ausführungsform der Erfindung sieht vor, dass so lange neue logische Verbindungen (neue Backups) hinzugefügt werden, bis die Wahrscheinlichkeit für große Übertragungszeiten kleiner ist als die Wahrscheinlichkeit eines Ausfalls des Automatisierungssystems. Der Ausfall der Anlage kann entweder durch einen Hardware-Defekt verursacht werden oder durch zu lange Reaktionszeiten. Die Wahrscheinlichkeit für einen Hardware-Defekt kann beispielsweise aus den Ausfallraten der Anlagenkomponenten ermittelt werden. Das Kriterium dabei ist, dass eine zu große Übertragungszeit ausreichend unwahrscheinlich wird, so dass die Gesamt-Ausfallwahrscheinlichkeit dadurch nicht wesentlich erhöht wird.

Bei einer Ausgestaltung der Erfindung wechselt eine Zuordnung einer Rolle einer bestimmten Steuerungsapplikation als Primary bzw. als Backup während des Betriebs des Automatisierungssystem, so dass die Redundanz erhalten bleibt. Der Wechsel kann aufgrund besonderer Ereignisse, beispielsweise einer gemessenen, besonders langen Antwortzeit der bisherigen Primary, oder auch zyklisch in vorgegebenen oder vorgebbaren Zeitintervallen erfolgen.

Insbesondere wenn die Übertragungszeiten für die von der Automatisierungsanlage ausgehenden Datenpakete und/oder die von der Automatisierungsanlage empfangenen Datenpakete ermittelt werden, lässt sich feststellen, welche Backups besonders geringe Übertragungszeiten aufweisen. Die Zuordnung der Rolle als "Primary" für eine bestimmte Steuerungsapplikation erfolgt dann vorteilhaft in Abhängigkeit der ermittelten Übertragungszeiten. Insbesondere kann dann die Steuerungsapplikation, die innerhalb eines bestimmten Zeitraums insgesamt die kürzesten Übertragungszeiten aufweist, die Rolle der Primary einnehmen.

Der Erfindung ist nicht auf eine bestimmte Art der Automatisierungsanlage beschränkt, sondern kann prinzipiell im Zusammenhang mit jeglicher Automatisierungsanlage verwendet werden, z.B. eine Produktionsanlage, eine be- oder verarbeitende Anlage, eine Anlage aus der Prozessindustrie etc. Insbesondere kann die Automatisierungsanlage auch lediglich eine einzige mittels des Steuerungssystems gesteuerte Maschine bzw. ein einziges mittels des Steuerungssystems gesteuertes Gerät aufweisen. In der Regel umfasst die erfindungsgemäß gesteuerte Automatisierungsanlage jedoch eine Vielzahl an Maschinen und/oder Geräten.

Die Automatisierungsanlage umfasst wenigstens einen Sensor, der ein Sensor-Signal liefert, und wenigstens einen Aktor, der in Abhängigkeit des Sensorsignals gesteuert wird. Dabei ist "gesteuert" nicht im streng regelungstechnischen Sinn zu verstehen, sondern schließt auch Regelungsvorgänge mit ein.

Die Steuerfunktion wird erfindungsgemäß durch die betreffende Steuerungsapplikation ausgeführt. Insbesondere führt die Steuerungsapplikation Steuerfunktionen eines Industrie-PCs, einer speicherprogrammierbaren Steuerung (SPS), einer numerischen Steuerung (CNC) oder einer sonstigen industriellen Steuerung aus.

Bei einer Ausgestaltung der Erfindung wird die Freigabe von der Primary jeweils nach Ablauf eines vorgegebenen Zeitintervalls oder nach dem Auftreten eines bestimmten Ereignisses an die Backup übermittelt. Dadurch ist genau bestimmt, wodurch und in welchen Abständen die Synchronisation der Teilsysteme (im Sinne der Erfindung) bewirkt wird. Insbesondere kann so die Nachlaufzeit zwischen der Primary und den Backups beeinflusst werden.

Die eingangs gestellte Aufgabe wird ferner gelöst durch ein Automatisierungssystem (1), umfassend eine Automatisierungsanlage (AA) und ein redundantes, cloud-basiertes Steuerungssystem, wobei das cloud-basierte Steuerungssystem einen Teil einer Cloud-Computing-Struktur bildende Steuerungsapplikationen umfasst, deren Rechenressourcen an unterschiedlichen Standorten vorgesehen sind und die über ein Netzwerk, das eine Vielzahl von Kommunikationsknotenpunkten und diese miteinander verbindende Kommunikationspfade aufweist, untereinander und mit der zu steuernden Automatisierungsanlage kommunikationstechnisch verbunden sind, zur Durchführung eines Verfahrens nach einem der Ansprüche 1 bis 16.

Die eingangs gestellte Aufgabe wird ferner gelöst durch ein redundantes, cloud-basiertes Steuerungssystem für ein Automatisierungssystem (1) nach Anspruch 17, wobei das cloud-basierte Steuerungssystem einen Teil einer Cloud-Computing-Struktur bildende Steuerungsapplikationen umfasst, deren Rechenressourcen an unterschiedlichen Standorten vorgesehen sind und die über ein Netzwerk (N), das eine Vielzahl von Kommunikationsknotenpunkten (KP) und diese miteinander verbindende Kommunikationspfade (P) aufweist, untereinander und mit einer der zu steuernden Automatisierungsanlage (AA) kommunikationstechnisch verbunden sind.

Die Erfindung wird nachfolgend anhand von Ausführungsbespielen exemplarisch näher beschrieben und erläutert. Dabei zeigen:
- FIG 1: Übertragungszeiten bei einer Daten-Übertragung in einem Computer-Netzwerk,
- FIG 2: eine Cloud-Computing-Struktur mit einer Primary und mehreren Backups, die untereinander und mit einer Automatisierungsanlage über ein Netzwerk verbunden sind, zur Steuerung der Automatisierungsanlage,
- FIG 3: die Synchronisation zwischen der Primary und einer Backup,
- FIG 4: den Übergang der Primaryschaft,
- FIG 5: den zeitlichen Nachlauf zwischen der Primary und der Backup,
- FIG 6: das Aufdaten einer neuen Backup,
- FIG 7: schematisch den Effekt des Verfahrens auf die Verteilungsfunktion der Übertragungszeiten von der Steuerung zu der Peripherieeinheit,
- FIG 8: Verfahrensschritte bei der Durchführung eines erfindungsgemäßen Verfahrens.

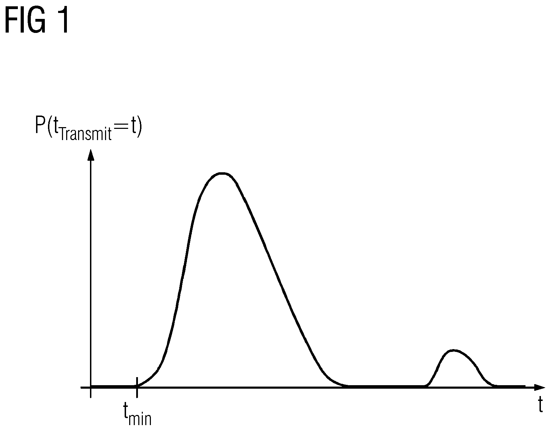

Figur 1 zeigt die typische Verteilung der Übertragungszeiten bei einer Daten-Übertragung in einem Computer-Netzwerk, beispielsweise dem Internet. Die minimale Übertragungszeit ist durch die physikalischen Gegebenheiten der Übertragungsstrecke bestimmt. Darüber gibt es eine große Bandbreite an Übertragungszeiten bis hin zu sehr großen Werten, die allerdings mit geringer Wahrscheinlichkeit zu beobachten sind.

Eine über das Computer-Netzwerk zu steuernde Automatisierungsanlage müsste demnach die großen Verzögerungen tolerieren, was nur für sehr wenige Anlagen möglich ist. Dies beschränkt bislang die Einsatzmöglichkeiten der Cloud-basierten Automatisierung deutlich.

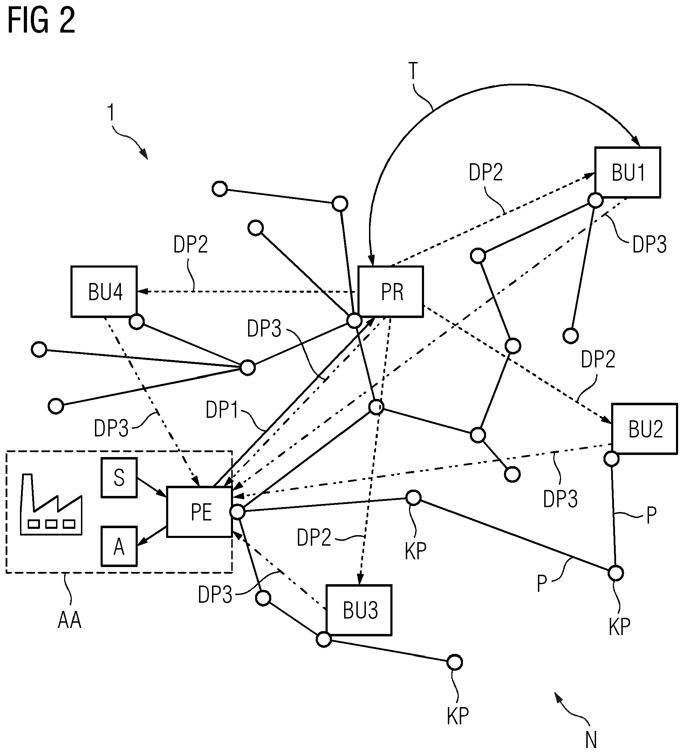

Aus Figur 2 ist ein redundantes Automatisierungssystem 1 gemäß der Erfindung ersichtlich.

Das Automatisierungssystem 1 umfasst zumindest eine zu steuernde, an einem Anlagenstandort aufgestellte Automatisierungsanlage AA sowie fünf zur Steuerung der Automatisierungsanlage AA eingerichtete, einen Teil einer Cloud-Computing-Struktur bildende Steuerungsapplikationen, deren Rechenressourcen an unterschiedlichen Standorten vorgesehen sind und die über ein Netzwerk N, insbesondere das Internet, das eine Vielzahl von Kommunikationsknotenpunkten KP und diese miteinander verbindende Kommunikationspfade P aufweist, untereinander und mit der Automatisierungsanlage AA kommunikationstechnisch verbunden sind. In Figur 2 sind der Übersichtlichkeit halber nur einige der Kommunikationsknotenpunkten KP bzw. Kommunikationspfade P mit dem jeweiligen Bezugszeichen KP bzw. P versehen.

Eine der Steuerungsapplikationen ist als Primary PR ausgeführt und die vier weiteren Steuerungsapplikationen im Ausführungsbeispiel als Backups BU1 bis BU4. Die Primary PR und die Backups BU1 bis BU4 bilden zusammen ein redundantes, cloud-basiertes Steuerungssystem, auch als Cloud-Computing-Struktur bezeichnet, zur Steuerung der Automatisierungsanlage AA.

Die Automatisierungsanlage AA ist über einen, von der Automatisierungsanlage AA umfassten, als Peripherieeinheit PE bezeichneten Rechner ebenfalls an das Netzwerk N angebunden. Die Peripherieeinheit PE sorgt insbesondere für die Netzwerkanbindung der Automatisierungsanlage AA und damit die Datenübertragung zwischen der Automatisierungsanlage AA und dem Steuerungssystem. Vorzugsweise besitzt die Peripherieeinheit PE auch eine gewisse Intelligenz, beispielsweise zur Verarbeitung und Aufbereitung von Sensordaten, bevor diese an die Primary übermittelt werden. Ferner ist es denkbar, dass die von dem Steuerungssystem an die Automatisierungsanlage AA übermittelten Steueranweisungen zunächst in der Peripherieeinheit PE aufbereitet bzw. verarbeitet werden, bevor sie Aktoren der Automatisierungsanlage AA zugeführt werden.

Die Automatisierungsanlage AA umfasst beispielhaft weiterhin einen Sensor S sowie einen Aktor A. Natürlich kann eine erfindungsgemäße Automatisierungsanlage AA eine Vielzahl an Sensoren S und Aktoren A aufweisen. Mit der beispielhaften Automatisierungsanlage AA soll daher lediglich das Funktionsprinzip der Erfindung erläutert werden. Der Sensor S erzeugt ein Sensorsignal, aus dem entweder direkt oder nach einer Verarbeitung, beispielsweise Filterung, ein für einen bestimmten Zeitpunkt gültiger Ist-Wert hervorgeht.

Seitens der Automatisierungsanlage AA, insbesondere der Peripherieeinheit PE der Automatisierungsanlage AA, wird nun über das Netzwerk N ein den Ist-Wert (Eingangswert) umfassendes erstes Datenpaket DP1 an die Primary PR gesendet. Dabei kann die Peripherieeinheit PE den Ist-Wert von sich aus, zum Beispiel zyklisch, an die Primary PR übertragen. Das erste Datenpaket kann jedoch auch infolge eines von der Primary PR initiierten Auslesevorgangs zu der Primary PR übertragen werden.

Die Primary PR verarbeitet den Ist-Wert gemäß bestimmter, von den Steuerungsapplikationen umfasster, wenigstens im Wesentlichen in der Primary PR und den Backups BU1 bis BU4 in identischer Form vorliegender Programmanweisungen eines Steuerprogramms und erzeugt daraus eine Steueranweisung (einen Ausgangswert) für den von der Automatisierungsanlage AA umfassten Aktor A.

Weiterhin werden zweite, den aktuellen Ist-Wert umfassende Datenpakete DP2 ausgehend von der Peripherieeinheit PE oder der Primary PR über das Netzwerk N an die Backups BU1 bis BU4 übertragen.

Weiterhin übermittelt die Primary PR, insbesondere nach Ablauf eines bestimmten Zeitintervalls (Zi, i=1, 2,...) oder nach dem Auftreten eines Ereignisses (E) (z.B. "Primary hat Bearbeitung abgeschlossen" oder "Primary hat einen Taskwechsel durchgeführt") Freigaben (F1, F2, ...) an die Backups BU1 bis BU4, aus denen hervorgeht, welche bestimmte Programmanweisungen des Steuerprogramms durch die Backups BU1 bis BU4 zur Abarbeitung freigegeben sind. Die Freigaben werden ebenfalls über das Netzwerk N übertragen.

Insbesondere verarbeiten die Backups BU1 bis BU4 aufgrund der Freigaben die gleichen bestimmten Programmanweisungen des Steuerprogramms, welche bereits durch die Primary PR vor den Freigaben verarbeitet wurden. Dabei werden von der jeweiligen Programmanweisung dieselben Ist-Werte berücksichtigt, die auch von der Primary berücksichtigt wurden. Die Backups BU1 bis BU4 erzeugen somit ebenfalls Steueranweisung für den von der Automatisierungsanlage AA umfassten Aktor A in Bezug auf den aktuellen Ist-Wert.

Sowohl die Primary PR als auch die Backups BU1 bis BU4 erzeugen die jeweilige Steueranweisung umfassende dritte Datenpakete DP3 und senden diese - ebenfalls über das Netzwerk N - an die Automatisierungsanlage AA.

Nur das zuerst an der Automatisierungsanlage AA eintreffende dritte Datenpaket Dp3 wird schließlich zur Steuerung des Aktors A verwendet.

Aus Figur 2 ist weiterhin ein Wechsel der Primaryschaft angedeutet. Die Primaryschaft gibt an, welche Steuerungsapplikation innerhalb der Cloud-Computing-Struktur aktuell die Rolle der Primary innehat. Gemäß dem Ausführungsbeispiel ist vorgesehen, dass die Primaryschaft in bestimmten zeitlichen Abständen oder aufgrund bestimmter Ereignisse zwischen den Steuerungsapplikationen wechselt. Der Wechsel kann beispielsweise zyklisch in fest vorgegebenen zeitlichen Abständen erfolgen. Ferner ist es möglich, dass die Übertragungszeiten innerhalb des Netzwerks N erfasst werden und eine Steuerungsapplikation mit besonders kurzen, insbesondere den innerhalb eines bestimmten Zeitraums kürzesten Übertragungszeiten die Primaryschaft übernimmt.

In Figur 2 ist ein Wechsel der Primaryschaft zwischen der aktuellen Primary PR und der Backup BU1 durch den Transferpfeil T angedeutet. Dies soll heißen, dass nachfolgend die aktuelle Backup BU1 die Rolle der Primary und die aktuelle Primary PR die Rolle der Backup BU1 übernimmt. Selbstverständlich kann der Wechsel der Primaryschaft auch mit jeder anderen Backup BU2 bis BU4 im Steuerungssystem erfolgen.

Ergänzend sei noch angemerkt, dass unter einem "Wechsel der Primaryschaft" auch verstanden werden kann, dass eine bereits in das System integrierte Backup oder eine neu in das System zu integrierende Backup künftig die Rolle der Primary übernimmt und die bisherige Primary aus dem Steuerungssystem ausscheidet, also nicht die Rolle einer Backup einnimmt.

Das der Erfindung zugrunde liegende Funktionsprinzip der Synchronisation wird nachfolgend ohne Einschränkung der Allgemeinheit anhand einer Primary und einer einzigen Backup erläutert. In der Realität umfasst das erfindungsgemäße Automatisierungssystem jedoch eine Vielzahl an Backups, die in analoger Weise mit der Primary synchronisiert werden.

Im Ausführungsbeispiel gemäß Figur 2 erhält die Peripherieeinheit PE über Eingangsleitungen Signale von Messumformern oder Messwertgebern (Sensoren) S, die zur Erfassung eines Anlagenzustands dienen, und gibt über Ausgangsleitungen Signale an Stellglieder (Aktoren) A aus, mit welchen die Automatisierungsanlage AA beeinflusst wird. Die Steuerungsapplikationen (Teilsysteme) PR und BU1 bis BU4 arbeiten zyklisch und im Wesentlichen synchron dasselbe Steuerprogramm ab.

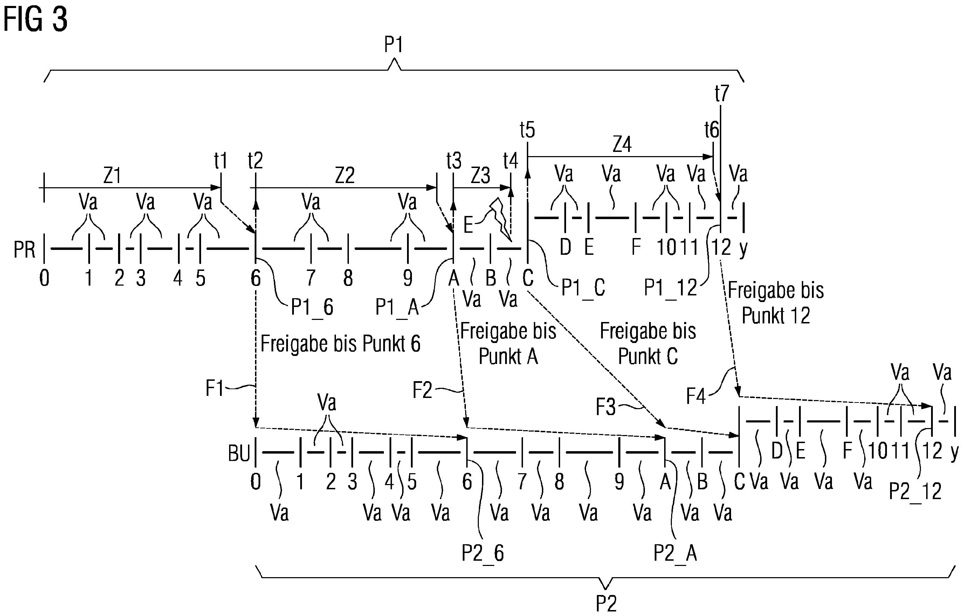

Zur Erläuterung einer ereignissynchronen Verarbeitung der Steuerprogramme wird im Folgenden auf Figur 3 verwiesen, in welcher Abläufe einer zeitlich asynchronen Kopplung von zwei Teilsystemen, einer Primary PR und einer Backup BU dargestellt werden, die einen technischen Prozess steuern. Eine "ereignissynchrone Verarbeitung" bedeutet in diesem Zusammenhang, dass sowohl die Primary PR als auch die Backup BU aufgrund eines Ereignisses gleiche Programmpfade des jeweiligen Steuerprogramms durchlaufen, wobei die Durchläufe zeitlich asynchron erfolgen.

Die Primary PR ist im Hinblick auf die Steuerung des technischen Prozesses führend, wobei die Primary PR die Eingangswerte, nachfolgend auch als Prozesseingangsinformationen, Prozesseingangswerte, Anlageneingangsinformationen oder Anlageneingangswerte bezeichnet, von der Peripherieeinheit PE liest und zeitlich asynchron der Backup BU bereitstellt.

Alternativ könnte die Backup BU die Werte auch direkt aus der Peripherieeinheit PE lesen bzw. direkt von der Peripherieeinheit PE gesendete Datenpakete empfangen, dürfen jedoch erst mit deren Bearbeitung beginnen, nachdem sie von der Primary PR - über entsprechende Freigaben - dazu beauftragt worden ist.

Die Primary PR verarbeitet ein Programm P1 zur Steuerung des technischen Prozesses, wobei auch die Backup BU ein zu diesem Steuerprogramm P1 entsprechendes Programm P2 verarbeitet. Beide Steuerprogramme P1, P2 weisen eine Vielzahl von Verarbeitungsabschnitten (Va) unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Steuerprogramm P1, P2 mittels der Primary PR und der Backup BU unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit die Primary PR und die Backup BU Freigaben, Quittungen oder sonstige Informationen über das Netzwerk austauschen können.

Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervalls Zi folgenden Unterbrechungsstelle -, übermittelt die Primary PR der Backup BU eine Freigabe bzw. ein Freigabesignal, welches der Backup BU anzeigt, bis zu welchem Verarbeitungsabschnitt Va die Backup BU das Steuerprogramm P2 verarbeiten darf. Diese Verarbeitungsabschnitte Va des Steuerprogramms P2 entsprechen denen, die die Primary PR bereits während der Verarbeitung des Steuerprogramms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, die Primary PR der Backup BU eine Freigabe F1 übermittelt. Diese Freigabe F1 umfasst die Information für die Backup BU, dass diese ihr zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe die Backup BU die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zur Backup BU entspricht. Die Verarbeitung dieser Verarbeitungsschritte Va mittels der Backups BU erfolgt also zeitlich asynchron zur Verarbeitung der entsprechenden Verarbeitungsabschnitte Va mittels der Primarys PR, wobei nach der Verarbeitung der Verarbeitungsabschnitte Va des Steuerprogramms P2 durch die Backup BU eine Bearbeitung von weiteren Verarbeitungsabschnitten Va durch die Backup BU nur dann erfolgt, wenn die Primary PR der Backup BU eine weitere Freigabe übermittelt. Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt die Primary PR der Backup BU eine weitere Freigabe F2, die der Backup BU anzeigt, dass diese weitere Verarbeitungsabschnitte Va bis zu der Unterbrechungsstelle P2_A bearbeiten kann. Diese Verarbeitungsabschnitte Va entsprechen wiederum denen, welche die Primary PR bereits vom Zeitpunkt t2 bis zum Zeitpunkt t3, also bis zur Unterbrechungsstelle P1_A, verarbeitet hat. Dies bedeutet, dass die Backup BU die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches die Primary PR während des Zeitintervalls Z3 zu einem Zeitpunkt t4 geeignet nach Maßgabe des Steuerprogramms P1 reagieren muss. In diesem Fall übermittelt die Primary PR der Backup BU eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der der Backup BU übermittelten Freigabe F3 verarbeitet die Backup BU die Verarbeitungsabschnitte Va des Steuerprogramms P2, welche den Verarbeitungsabschnitten Va des Steuerprogramms P1 entsprechen, welche die Primary PR zwischen den Zeitpunkten t3 und t5 bereits verarbeitet hat.

Aufgrund des Ereignisses E verarbeitet die Primary PR während des Zeitintervalls Z4 Verarbeitungsabschnitte Va höherer Priorität, z. B. vollzieht die Primary PR einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet die Backup BU ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei die Backup BU ebenfalls einen Threadwechsel vollzieht.

Wie erläutert, versetzen die Freigaben der Primary PR die Backup BU in die Lage, das gleiche "Threadgebirge" wie die Primary PR zu durchlaufen, was bedeutet, dass die Backup BU einen "Threadwechsel" an einer Stelle im Steuerprogramm P2 vornimmt, die der Stelle im Steuerprogramm P1 entspricht. Die Backup BU setzt ihre Bearbeitung nur dann fort, wenn diese dazu von der Primary PR durch eine Freigabe aufgefordert wird. Im Hinblick auf die Verarbeitung der Verarbeitungsabschnitte verarbeitet die Primary PR diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch die Backup BU, wobei die Primary PR weiter ihr Steuerprogramm P1 verarbeitet und nicht aktiv auf eine Antwort der Backup BU wartet. Die Backup BU läuft bezüglich der Verarbeitung der entsprechenden Verarbeitungsabschnitte der Primary PR nach und verarbeitet diese aufgrund der erteilten Primary-Freigaben.

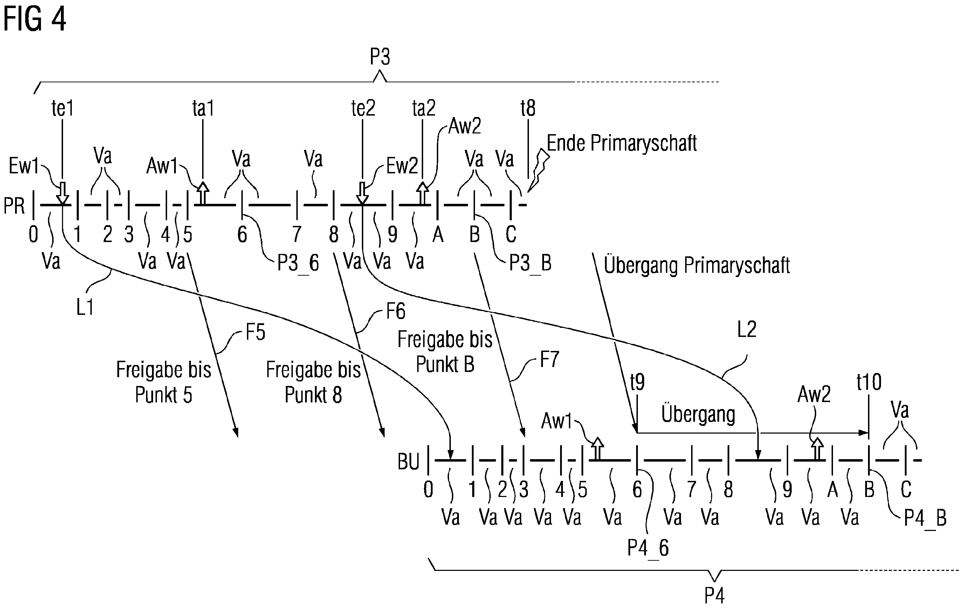

Im Folgenden wird auf Figur 4 verwiesen, in welcher ein Übergang der Primaryschaft von der Primary PR zur Backup BU dargestellt ist.

In der beschriebenen Art und Weise übermittelt die Primary PR der Backup BU Freigaben F5, F6, F7, wobei angenommen wird, dass zu einem Zeitpunkt t8 die Primary PR die Primaryschaft beendet. Das Ende der Primaryschaft kann dadurch bedingt sein, dass die Primary PR von sich aus die Primaryschaft einstellt und diese Eigenschaft auf eine Backup BU im Steuerungssystem überträgt. Der Backup BU könnte dies durch ein entsprechendes Signal der bisherigen Primary PR mitgeteilt werden. Alternativ wäre es sogar denkbar, dass die Backup BU von sich aus - also ohne entsprechendes Signal seitens der bisherigen Primary PR - die Primaryschaft übernimmt. Dadurch wäre es sogar möglich, dass das Steuerungssystem bei einem Ausfall der bisherigen Primary PR weiterhin ihre Steuerungsaufgabe aufrechterhält.

Aufgrund der Freigaben F5 bis F7 verarbeitet die Backup BU die Verarbeitungsabschnitte Va eines Steuerprogramms P4 bis zu einer Übergangsstelle P4_B (Übergangsstelle B), wobei diese Verarbeitungsabschnitte Va den Verarbeitungsabschnitten Va eines Steuerprogramms P3 bis zur Übergangsstelle P3_B (Übergangsstelle B) entsprechen, welche mittels der Primary PR verarbeitet wurden.

Zu Zeitpunkten te1, te2 greift die Primary PR im Rahmen der Verarbeitung des Steuerprogramms P3 lesend auf die Peripherieeinheit PE zu, was bedeutet, dass die Primary PR Anlageneingangswerte Ew1, Ew2 einliest, diese nach Maßgabe des Steuerprogramms P3 verarbeitet und Ausgangswerte, nachfolgend auch als Prozessausgangsinformationen, Prozessausgangswerte, Anlagenausgangsinformationen oder Anlagenausgangswerte bezeichnet, Aw1, Aw2 erzeugt, die die Primary PR zu Zeitpunkten ta1, ta2 der Peripherieeinheit PE übermittelt. Die Primary PR übermittelt der Backup BU die Prozesseingangswerte Ew1, Ew2, was in der Zeichnung durch geschwungene Linien L1, L2 angedeutet ist. Die Übermittlung erfolgt zusammen mit den Freigaben F5, F7, um die Kommunikationslast zwischen der Primary PR und der Backup BU während der Verarbeitung der Verarbeitungsabschnitte Va bis zu diesen Freigaben F5, F7 nicht zu erhöhen. Die Backup BU verarbeitet ebenfalls diese Prozesseingangswerte Ew1, Ew2 entsprechend dem Steuerprogramm P4 und erzeugt ebenfalls die Prozessausgangswerte Aw1, Aw2, die die Backup BU der Peripherieeinheit PE übermittelt. Dabei wird davon ausgegangen, dass die Peripherieeinheit PE eine "geschaltete" Peripherieeinheit mit einem Primär- und einem Sekundäranschluss ist. Der Primäranschluss ist zum Empfang der Prozessausgangswerte der Primary PR und der Sekundäranschluss zum Empfang der Prozessausgangswerte der Backup BU vorgesehen, wobei die Backup BU die Peripherieeinheit PE von dem Primär- auf den Sekundäranschluss umschaltet, falls die Backup BU erkennt, dass die bisherige Primary PR ihre Primaryschaft abgibt. Vorzugsweise erfolgt dies dadurch, dass die bisherige Primary PR ein entsprechendes Signal an die ausgewählte Backup BU überträgt. Es ist jedoch auch möglich, dass die Backup BU von sich aus die Primaryschaft übernimmt, zum Beispiel weil sie über einen bestimmten Zeitraum kein Signal mehr von der Primary PR empfangen hat und diese daher möglicherweise ausgefallen ist. Weiterhin ist es auch möglich, dass die Primaryschaft zyklisch, insbesondere in fest vorgegebenen Zeitintervallen bzw. zu fest vorgegebenen Zeitpunkten, zwischen den Teilsystemen wechselt. Auch in diesem Fall bedarf es keines Signals von der bisherigen Primary PR zu der Backup BU, um den Wechsel der Primaryschaft auszulösen.

Wie erläutert wird angenommen, dass zu einem Zeitpunkt t8 die Primaryschaft der bisherigen Primary PR endet. Die Backup BU erkennt dies z. B. dadurch, dass die Primary PR der Backup BU eine entsprechende Nachricht sendet. Nachdem die Backup BU das Ende der Primaryschaft der bisherigen Primary PR beispielsweise zu einem Zeitpunkt t9 erkannt hat, übernimmt die Backup BU nicht sofort die Primaryschaft, denn zu diesem Zeitpunkt t9 unterscheidet sich der Systemzustand der Backup BU von dem der Primary PR und ein stoßfreier Wechsel bzw. Übergang ist daher nicht möglich. Zu diesem Zeitpunkt t9 hat die Backup BU erst die Verarbeitungsabschnitte Va bis zu einer Übergangsstelle P4_6 (Übergangsstelle 6) verarbeitet, die entsprechenden Verarbeitungsabschnitte Va der Primary PR bis zu einer Übergangsstelle P3_6 (Übergangsstelle 6) "liegen" somit in der Vergangenheit. Erst nach einem Übergang, d. h. nachdem die Backup BU die mittels der Freigabe F7 freigegebenen Verarbeitungsabschnitte Va bis zur Übergangsstelle P4_B zu einem Zeitpunkt t10 verarbeitet hat, übernimmt die Backup BU die Primaryschaft und somit die Steuerung der Automatisierungsanlage, wobei zu diesem Zeitpunkt t10 die Backup BU die Peripherieeinheit PE von dem Primär- auf den Sekundäranschluss umschaltet. Während dieses Übergangs durchläuft also die (bisherige) Backup BU noch das gleiche Threadgebirge pfadsynchron und verarbeitet die gleichen Prozesseingangswerte wie die (bisherige) Primary PR vor deren Ausfall verarbeitet hat, wobei die (bisherige) Backup BU aufgrund dieser Eingangswerte die gleichen Prozessausgangswerte wie die (bisherige) Primary PR ermittelt. Der Übergang ist dann beendet, wenn das Ziel der letzten Freigabe - im vorliegenden Beispiel die Verarbeitung der Verarbeitungsabschnitte Va bis zur Unterbrechungsstelle P4_B - erreicht ist.

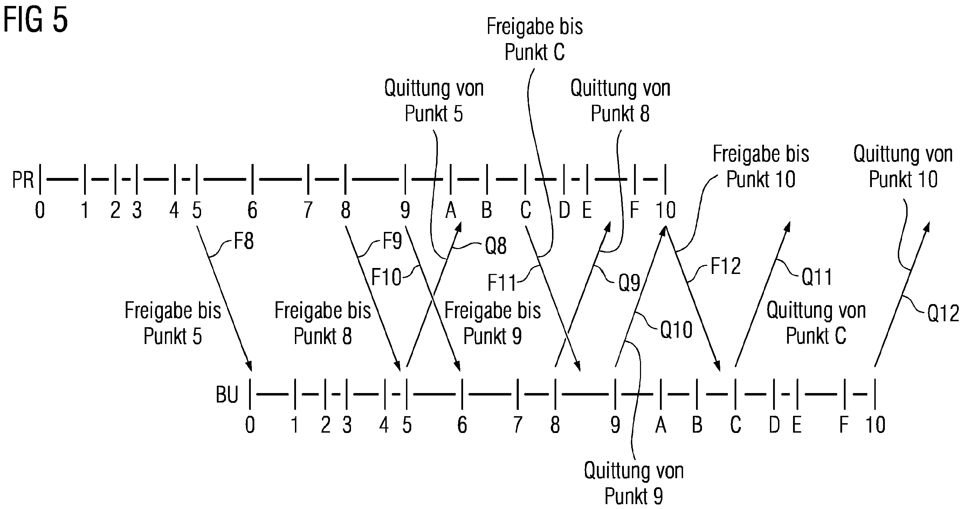

Um den zeitlichen Nachlauf der Backup gegenüber der Primary in einem tolerierbaren Maß zu halten, wird - wie in Figur 5 veranschaulicht - jede Freigabe F8 bis F12 der Primary PR dann durch die Backup BU asynchron mittels jeweiliger Quittungen Q8 bis Q12 quittiert, falls die Backup BU die jeweilige Bearbeitung abgeschlossen hat. Die Primary PR wertet die Anzahl der unquittierten Freigaben aus und ermittelt aus diesen den aktuellen Nachlauf der Backup BU. Für den Fall, dass der zeitliche Nachlauf zu hoch bzw. zu lang ist, was z. B. zu einem Redundanzverlust führen kann, ergreift die Primary PR geeignete Maßnahmen, um den zeitlichen Nachlauf zu vermindern bzw. nicht zu groß werden zu lassen.

Beispielsweise kann die Primary PR als Reaktion auf einen zu großen Nachlauf die Verarbeitung niederpriorer Threads aussetzen oder verzögern, wobei die Verarbeitung der höherprioren Threads deutlich weniger als 100 % der Rechenzeit erfordert. Somit hat die Primary PR weniger Verarbeitungsabschnitte zu durchlaufen und erzeugt weniger Freigaben, so dass die Backup BU "aufholen" kann.

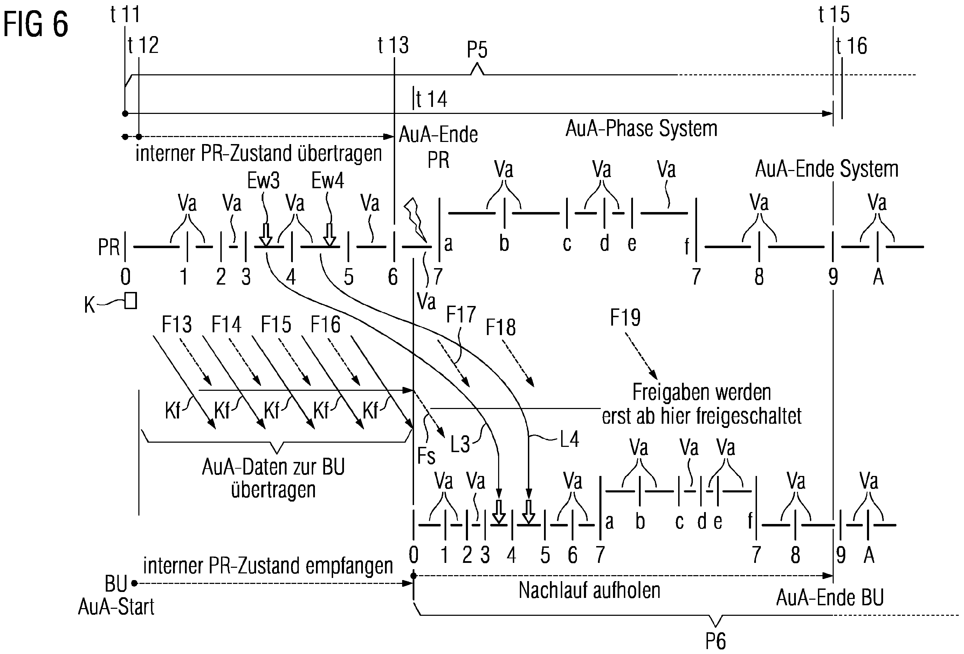

Bezüglich des Aufdatens neuer Backups wird auf Figur 6 verwiesen, in welcher ein Aufdat-Ablauf des Automatisierungssystems dargestellt ist.

Bevor der eigentliche Aufdat-Ablauf beginnt, muss zunächst sichergestellt sein, dass in der neu in das Steuerungssystem einzubindenden Backup BU das gleiche Steuerprogramm vorhanden ist wie in der Primary PR. Ist dies nicht der Fall, so zieht sich die neue Backup BU zunächst dieses Steuerprogramm vorzugsweise aus dem Netzwerk. Es kann aus der Primary PR, einer bereits in das Steuerungssystem integrierten Backup oder prinzipiell einem beliebigen anderen, dafür vorgesehenen Rechner im Netzwerk heruntergeladen werden.

Der Aufdat-Ablauf beginnt zu einem Zeitpunkt t11, bis zu dem die Primary PR erkannt hat, dass eine neue Backup BU an das Netzwerk angekoppelt ist, wobei ab diesem Zeitpunkt t11 die Aufdat-Phase sowohl der Primary PR als auch der Backup BU beginnt. Die Primary PR erstellt ab diesem Zeitpunkt t11 eine lokale Kopie K aller relevanten Daten, welche ihren internen Zustand bis zu diesem Zeitpunkt t11 repräsentiert, wobei die Primary PR weiterhin die Automatisierungsanlage steuert und Verarbeitungsabschnitte Va eines Steuerprogramms P5 verarbeitet. Ab einem Zeitpunkt t12 bis zu einem Zeitpunkt t13, zu dem die Aufdat-Phase der Primary PR abgeschlossen ist, übermittelt die Primary PR der Backup BU fragmentiert diese Kopie K - was in der Zeichnung mittels Pfeilen Kf angedeutet ist -, die die Backup BU bis zu einem Zeitpunkt t14 vollständig empfangen hat. Zu diesem Zeitpunkt t14 weist nun die Backup BU den gleichen internen Zustand wie die Primary zum Zeitpunkt t11 auf. Ab dem Zeitpunkt t12 werden ferner alle Freigaben der Primary PR sowie alle von der Primary PR von der Peripherieeinheit PE eingelesenen Anlageneingangswerte auf der Primary PR, der Backup BU oder einem weiteren Teilsystem des Automatisierungssystems zwischengespeichert, wobei diese Freigaben für eine Bearbeitung durch die Backup BU erst nach dem vollständigen Empfang der Kopie K freigeschaltet werden. Im vorliegenden Ausführungsbeispiel wird angenommen, dass während eines Zeitabschnitts ab dem Zeitpunkt t11 bis zum Zeitpunkt t13, zu welchem die Übertragung der Kopie K abgeschlossen ist, die Primary PR Freigaben F13, F14, F15, F16 erzeugt und ferner Anlageneingangswerte Ew3, Ew4 eingelesen hat. Diese Freigaben F13 bis F16 und diese Prozesseingangswerte Ew3, Ew4 werden der Backup BU erst ab einem Zeitpunkt t14, also zu dem Zeitpunkt, zu welchem der interne Zustand der Primary PR vollständig der Backup BU bereitgestellt ist, freigeschaltet, was in der Figur durch einen Pfeil Fs und durch geschwungene Linien L3, L4 angedeutet ist. Nach dieser Freischaltung durch die Primary PR führt die Backup BU sich an den internen Zustand der Primary PR heran, indem die Backup BU nach Maßgabe der Freigaben F13 bis F16 die Daten der Kopie K verarbeitet. Dabei verarbeitet die Backup BU die Verarbeitungsabschnitte Va ihres Steuerprogramms P6, die den Verarbeitungsabschnitten Va des Steuerprogramms P5 der Primary PR bis zum Zeitpunkt t13 entsprechen, wobei die Backup BU im Hinblick auf die Verarbeitung des Steuerprogramms P6 die Prozesseingangswerte Ew3, Ew4 berücksichtigt.

Aufgrund dessen, dass die Backup BU sich zeitlich asynchron an den internen Zustand der Primary PR heranführt, läuft im Hinblick auf die Verarbeitung der entsprechenden Verarbeitungsabschnitte Va des Steuerprogramms P6 die Backup BU der Primary PR nach, wobei dieser zeitliche Nachlauf auf ein tolerierbares Maß verringert werden muss, denn ein zu hoher zeitliche Nachlauf kann zu einem Redundanzverlust führen. Um diesen zeitlichen Nachlauf zu vermindern, ist vorgesehen, dass die Verarbeitungsgeschwindigkeit der Backup BU relativ zur Verarbeitungsgeschwindigkeit der Primary PR höher ist, was in der Figur in Form "verkürzt" dargestellter Verarbeitungsabschnitte Va im Steuerprogramm P6 dargestellt ist. Diese relative Erhöhung der Verarbeitungsgeschwindigkeit der Backup BU kann z. B. bewirkt werden, indem die Backup BU die Verarbeitungsabschnitte Va ihres Programms P6 schneller oder die Primary PR die Verarbeitungsabschnitte Va ihres Programms P5 langsamer verarbeitet. Erst dann, wenn der Nachlauf aufgeholt bzw. auf ein tolerierbares Maß bzw. auf einen vorgegebenen Wert verringert wird, ist die zum Zeitpunkt t12 beginnende Aufdat-Phase der Backup BU und somit des Automatisierungssystems abgeschlossen.

Im Rahmen der Aufdat-Phase der Backup BU bearbeitet die Backup BU ab dem Zeitpunkt t14 bis zum Zeitpunkt t15 sowohl die während der Übertragung der Kopie K zwischengespeicherten Freigaben F13 bis F16 als auch Freigaben F17, F18, F19, welche die Primary PR der Backup BU nach dieser Übertragung übermittelt. Diese Freigaben F17 bis F19 zeigen der Backup BU an, welche Verarbeitungsabschnitte Va des Steuerprogramms P6 ferner durch die Backup BU zu verarbeiten sind, wobei diese Verarbeitungsabschnitte Va den Verarbeitungsabschnitten Va des Steuerprogramms P5 entsprechen, die die Primary PR bereits ab dem Zeitpunkt t14 verarbeitet hat. Mit anderen Worten: Nachdem die Primary PR der Backup BU die Kopie vollständig übermittelt hat bzw. die Backup BU diese Kopie K vollständig empfangen hat, verarbeitet die Backup BU ab dem Zeitpunkt t14 bis zum Zeitpunkt t16 alle freigegebenen Verarbeitungsabschnitte Va ihres Steuerprogramms P6, welche denen entsprechen, die die Primary PR bereits ab dem Zeitpunkt t11 bis zum Zeitpunkt t15 verarbeitet hat.

Ab dem Zeitpunkt t15 ist die Aufdat-Phase abgeschlossen und das redundante Automatisierungssystem um eine Backup BU erweitert. Die weiteren Durchläufe der entsprechenden Programmpfade auf der Primary PR und der Backup BU laufen ab dem Zeitpunkt t16 in der oben beschriebenen Art und Weise zeitlich asynchron ab.

Wie weiter oben bereits ausgeführt wurde, werden vorzugsweise solange weitere Backups in das Automatisierungssystem eingebunden - insbesondere entsprechend der beschriebenen Vorgehensweise zum Aufdaten, bis ein Abbruchkriterium erreicht ist.

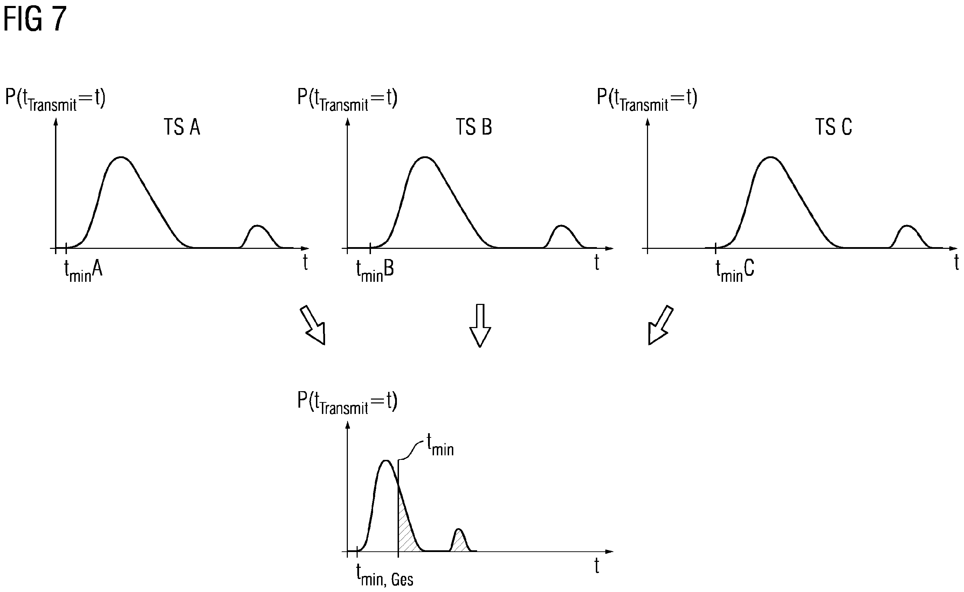

Figur 7 zeigt schematisch den Effekt des Verfahrens auf die Verteilungsfunktion der Übertragungszeiten zwischen dem Steuerungssystem und der Peripherieeinheit. Aufgezeigt ist die Wahrscheinlichkeit P(t_{Transmit} = t), also die Wahrscheinlichkeit P, dass die Verzögerung genau t entspricht. Aus der Figur sind ferner die minimalen Übertragungszeiten tₘᵢₙ A, tₘᵢₙ B und tₘᵢₙ C für die Teilsysteme TS A, TS B und TS C ersichtlich. Wird eine geforderte Übertragungszeit tₘᵢₙ angenommen, so steigt die Wahrscheinlichkeit, diese zu unterschreiten, mit jeder weiteren logischen Verbindung zur Peripherieeinheit, also mit jeder weiteren Backup im Steuerungssystem. Selbst dann, wenn eine dieser logischen Verbindungen nur eine geringe Wahrscheinlichkeit für kurze Übertragungszeiten besitzt, verbessert sich die resultierende Übertragungszeit weiter. Nur dann, wenn die minimale Übertragungszeit über der geforderten liegt, entsteht kein positiver Beitrag (siehe Figur 7 oben, rechts). Eine Verschlechterung der resultierenden Verteilung tritt allerdings trotzdem nicht auf, da die Peripherieeinheit die langen Übertragungszeiten ignoriert.

Wie aus Figur 7 ersichtlich ist, wird im Ausführungsbeispiel die geforderte Übertragungszeit tₘᵢₙ durch die durch das Steuerungssystem erreichbare Übertragungszeit tₘᵢₙ, _{Ges} unterschritten.

Mit jeder neuen logischen Verbindung, die unterschiedliche Netzwerkpfade nutzt, verringert sich potenziell die Wahrscheinlichkeit für große Übertragungszeiten. Mit jeder weiteren logischen Verbindung erhöht sich jedoch auch die Belastung des Netzwerks, was tendenziell zu größeren Übertragungszeiten führt.

Vorteilhaft werden solange neue logische Verbindungen (weitere Backups) hinzugefügt, bis
- die Wahrscheinlichkeit für große Übertragungszeiten wieder steigt, z.B. aufgrund von erhöhtem Netzwerk-Verkehr;
- die Wahrscheinlichkeit für große Übertragungszeiten kleiner ist als die Wahrscheinlichkeit eines Ausfalls des Steuerungssystems.

Mit großen Übertragungszeiten sind hier Zeiten gemeint, die über der geforderten Übertragungszeit liegen. Durch dieses Vorgehen wird sichergestellt, dass die in diesem Netzwerk bestmöglichen Übertragungszeiten erreicht werden, ohne das Netzwerk unnötig zu belasten.

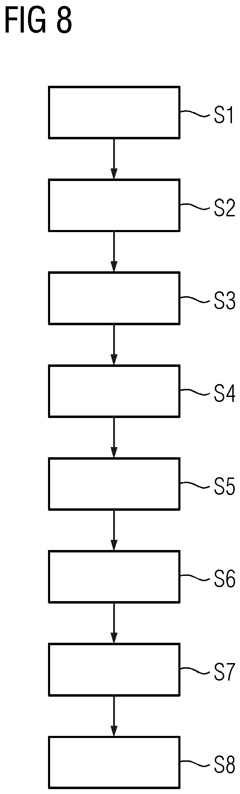

Nachfolgend werden die wesentlichen Verfahrensschritte bei der Durchführung eines erfindungsgemäßen Verfahrens nochmals in Form eines Ablaufdiagramms gemäß FIG 8 verdeutlicht.

In einem ersten Verfahrensschritt S1 wird ein Automatisierungssystem, umfassend zumindest eine zu steuernde, an einem Anlagenstandort aufgestellte Automatisierungsanlage sowie wenigstens zwei zur Steuerung der Automatisierungsanlage eingerichtete, einen Teil einer Cloud-Computing-Struktur bildende Steuerungsapplikationen, deren Rechenressourcen an unterschiedlichen Standorten vorgesehen sind und die über ein Netzwerk, das eine Vielzahl von Kommunikationsknotenpunkten und diese miteinander verbindende Kommunikationspfade aufweist, untereinander und mit der Automatisierungsanlage kommunikationstechnisch verbunden sind, bereitgestellt, wobei eine erste Steuerungsapplikation der Steuerungsapplikationen als Primary und wenigstens eine zweite Steuerungsapplikation der Steuerungsapplikationen als Backup arbeitet.

In einem weiteren Verfahrensschritt S2 empfängt die Primary über das Netzwerk ein von der Automatisierungsanlage ausgehendes, einen Eingangswert der Automatisierungsanlage umfassendes erstes Datenpaket.

In einem weiteren Verfahrensschritt S3 verarbeitet die Primary den Eingangswert gemäß bestimmter, von den Steuerungsapplikationen umfasster, wenigstens im Wesentlichen in der Primary und der Backup in identischer Form vorliegender Programmanweisungen eines Steuerprogramms und erzeugt daraus einen Ausgangswert (eine Steueranweisung) für einen von der Automatisierungsanlage umfassten Aktor.

In einem weiteren Verfahrensschritt S4 überträgt die Primary oder die Automatisierungsanlage ein zweites, den Eingangswert umfassendes Datenpaket über das Netzwerk an die Backup.

In einem weiteren Verfahrensschritt S5 übermittelt die Primary eine Freigabe (F1, F2, ...) an die Backup.

In einem weiteren Verfahrensschritt S6 verarbeitet die Backup aufgrund der Freigabe Programmanweisungen des Steuerprogramms, welche den bereits mittels der Primary verarbeiteten, bestimmten Programmanweisungen des Steuerprogramms entsprechen, und die Backup erzeugt daraus ebenfalls den Ausgangswert für den von der Automatisierungsanlage umfassten Aktor.

In einem weiteren Verfahrensschritt S7 werden die den jeweiligen Ausgangswert umfassenden dritten Datenpakete sowohl von der Primary als auch von der Backup an die Automatisierungsanlage gesendet.

In einem weiteren Verfahrensschritt S8 wird das zuerst an der Automatisierungsanlage eintreffende dritte Datenpaket mit dem davon umfassten Ausgangswert zur Steuerung des Aktors verwendet. Zu einem späteren Zeitpunkt an der Automatisierungsanlage eintreffende, den betreffenden Ausganswert umfassende dritte Datenpakete bleiben im weiteren Verlauf unberücksichtigt.

## Patentansprüche

1. Verfahren zum Betreiben eines Automatisierungssystems (1), umfassend zumindest eine zu steuernde, an einem Anlagenstandort aufgestellte Automatisierungsanlage (AA) sowie wenigstens zwei zur Steuerung der Automatisierungsanlage (AA) eingerichtete, einen Teil einer Cloud-Computing-Struktur bildende Steuerungsapplikationen, deren Rechenressourcen an unterschiedlichen Standorten vorgesehen sind und die über ein Netzwerk (N), das eine Vielzahl von Kommunikationsknotenpunkten (KP) und diese miteinander verbindende Kommunikationspfade (P) aufweist, untereinander und mit der Automatisierungsanlage (AA) kommunikationstechnisch verbunden sind,
- wobei eine erste Steuerungsapplikation der Steuerungsapplikationen als Primary (PR) und wenigstens eine zweite Steuerungsapplikation der Steuerungsapplikationen als Backup (BU; BU1 - BU4) arbeitet,
- wobei die Primary (PR) über das Netzwerk (N) ein von der Automatisierungsanlage ausgehendes, einen Eingangswert (Ewl - Ew4) der Automatisierungsanlage umfassendes erstes Datenpaket (DP1) empfängt,
- wobei die Primary (PR) den Eingangswert (Ew1 - Ew4) gemäß bestimmter, von den Steuerungsapplikationen umfassten, wenigstens im Wesentlichen in der Primary (PR) und der Backup (BU; BU1 - BU4) in identischer Form vorliegenden Programmanweisungen eines Steuerprogramms (P1 - P6) verarbeitet und daraus einen Ausgangswert (Awl, Aw2) für einen von der Automatisierungsanlage (AA) umfassten Aktor (A) erzeugt,
- wobei ein zweites, den Eingangswert (Ew1 - Ew4) umfassendes Datenpaket (DP2) über das Netzwerk (N) an die Backup (BU; BU1 - BU4) übertragen wird,
- wobei eine Freigabe (F1, F2, ...) von der Primary (PR) an die Backup (BU; BU1 - BU4) übermittelt wird,
- wobei aufgrund der Freigabe (F1, F2, ...) Programmanweisungen des mittels der Backup (BU; BU1 - BU4) zu verarbeitenden Steuerprogramms (P1 - P6) verarbeitet werden, welche den bereits verarbeiteten, bestimmten Programmanweisungen des mittels der Primary (PR) zu verarbeitenden Steuerprogramms (P1 - P6) entsprechen, und die Backup (BU; BU1 - BU4) daraus ebenfalls den Ausgangswert (Awl, Aw2) für den von der Automatisierungsanlage (AA) umfassten Aktor (A) erzeugt,
- wobei den jeweilige Ausgangswert (Awl, Aw2) umfassende dritte Datenpakete (DP3) sowohl von der Primary (PR) als auch von der Backup (BU; BU1 - BU4) an die Automatisierungsanlage (AA) gesendet werden und
- wobei das zuerst an der Automatisierungsanlage (AA) eintreffende dritte Datenpaket (DP3) zur Steuerung des Aktors (A) verwendet wird.

2. Verfahren nach Anspruch 1, wobei während eines Betriebs des Automatisierungssystems (1) fortlaufend von der Automatisierungsanlage (AA) erste Datenpakete (DP1) erzeugt und an die Primary (PR) übermittelt, zweite Datenpakete (DP2) von der Automatisierungsanlage (AA) oder der Primary (PR) erzeugt und an die Backup (BU; BU1 - BU4) übermittelt und von der Primary (PR) und der Backup (BU; BU1 - BU4) dritte Datenpakete (DP3) erzeugt und an die Automatisierungsanlage (AA) übermittelt werden.

3. Verfahren nach Anspruch 1 oder 2, wobei das zweite, den Eingangswert (Ew1 - Ew4) umfassende Datenpaket (DP2) von der Primary (PR) über das Netzwerk (N) an die Backup (BU; BU1 - BU4) übertragen wird.

4. Verfahren nach Anspruch 1 oder 2, wobei das zweite, den Eingangswert (Ew1 - Ew4) umfassende Datenpaket (DP2) von der Automatisierungsanlage (AA) über das Netzwerk (N) an die Backup (BU; BU1 - BU4) übertragen wird.

5. Verfahren nach einem der vorherigen Ansprüche, wobei eine Vielzahl an als Backup (BU; BU1 - BU4) arbeitende Steuerungsapplikationen, deren Rechenressourcen an unterschiedlichen Standorten vorgesehen sind und die über das Netzwerk (N) mit der Automatisierungsanlage (AA) sowie der Primary (PR) kommunikationstechnisch verbunden sind, von dem Automatisierungssystem (1) umfasst sind und erste Datenpakete (DP1) von der Automatisierungsanlage (AA) oder der Primary (PR) empfangen und dritte Datenpakete (DP3) erzeugen und an die Automatisierungsanlage (AA) übermitteln.

6. Verfahren nach einem der vorherigen Ansprüche, wobei die Automatisierungsanlage (AA) die von der Automatisierungsanlage (AA) ausgehenden ersten Datenpakete (DP1) jeweils mit einer eindeutigen Sequenznummer versieht und die Primary (PR) sowie die Backup (BU; BU1 - BU4) die zu einem ersten Datenpaket (DP1) korrespondierenden dritten Datenpakete (DP) jeweils mit einer zu der Sequenznummer korrespondierenden Sequenznummer versehen und die Automatisierungsanlage (AA) anhand einer von dem jeweiligen an die Automatisierungsanlage (AA) übermittelten dritten Datenpaket (DP3) umfassten Sequenznummer erkennt, welches der zu einem bestimmten ersten Datenpaket (DP1) korrespondierenden, an die Automatisierungsanlage (AA) übermittelten dritten Datenpakete (DP3) zuerst an der Automatisierungsanlage (AA) eintrifft und dieses Datenpaket (DP3) weiterverarbeitet.

7. Verfahren nach Anspruch 6, wobei die Automatisierungsanlage (AA) zeitlich nachfolgend eintreffende dritte Datenpakete (DP3) mit der betreffenden Sequenznummer ignoriert.

8. Verfahren nach einem der vorherigen Ansprüche, wobei eine Übertragung der ersten (DP1) und/oder zweiten (DP2) und/oder dritten (DP3) Datenpakete zwischen den Komponenten des Automatisierungssystems (1) gemäß einem PROFINET-Standard erfolgt.

9. Verfahren nach einem der vorherigen Ansprüche, wobei wenigstens eine weitere, als weitere Backup (BU; BU1 - BU4) arbeitende Steuerungsapplikation im Rahmen einer Aufdat-Phase (AuA) in das Automatisierungssystem (1) eingebunden wird.

10. Verfahren nach Anspruch 9, wobei solange weitere Backups (BU; BU1 - BU4) in das Automatisierungssystem (AA) eingebunden werden, bis ein Abbruchkriterium erreicht ist.

11. Verfahren nach Anspruch 10, wobei anhand statistischer Methoden ermittelt wird, inwieweit die Einbindung einer weiteren Backup (BU; BU1 - BU4) in das Automatisierungssystem (1) in dem Automatisierungssystem (1) erreichbare Antwortzeiten reduziert und in Abhängigkeit des Ergebnisses dieser Ermittlung gegebenenfalls die weitere Backup (BU; BU1 - BU4) in das Automatisierungssystem (1) eingebunden wird.

12. Verfahren nach einem der vorherigen Ansprüche, wobei eine Zuordnung einer Rolle einer bestimmten Steuerungsapplikationen als Primary (PR) bzw. als Backup (BU; BU1 - BU4) während des Betriebs des Automatisierungssystem (1) wechselt, insbesondere zyklisch wechselt.

13. Verfahren nach Anspruch 12, wobei Übertragungszeiten für die von der Automatisierungsanlage (AA) ausgehenden Datenpakete (DP1, DP2) und/oder die von der Automatisierungsanlage (AA) empfangenen Datenpakete (DP3) ermittelt werden und die Zuordnung der Rolle Primary (PR) in Abhängigkeit der ermittelten Übertragungszeiten erfolgt.

14. Verfahren nach Anspruch 13, wobei die Übertragungszeiten zyklisch ermittelt werden.

15. Verfahren nach einem der vorherigen Ansprüche, wobei die Steuerungsapplikationen bei der Automatisierungsanlage (AA) Steuerungsfunktionen einer speicherprogrammierbaren Steuerung ausführen.

16. Verfahren nach einem der vorherigen Ansprüche, wobei die Freigabe (F1, F2, ...) von der Primary (PR) jeweils nach Ablauf eines vorgegebenen Zeitintervalls (Zi, i=1, 2,...) oder nach dem Auftreten eines Ereignisses (E) an die Backup (BU; BU1 - BU4) übermittelt wird.

17. Redundantes, cloud-basiertes Steuerungssystem, umfassend einen Teil einer Cloud-Computing-Struktur bildende Steuerungsapplikationen, deren Rechenressourcen an unterschiedlichen Standorten vorgesehen sind und die über ein Netzwerk (N), das eine Vielzahl von Kommunikationsknotenpunkten (KP) und diese miteinander verbindende Kommunikationspfade (P) aufweist, untereinander und mit einer zu steuernden Automatisierungsanlage (AA) kommunikationstechnisch verbunden sind, wobei das cloud-basierte Steuerungssystem zur Durchführung eines Verfahrens nach einem der Ansprüche 1 bis 16 geeignet ist.

18. Automatisierungssystem (1), umfassend eine Automatisierungsanlage (AA) sowie ein redundantes, cloud-basiertes Steuerungssystem nach Anspruch 17.

## Claims

1. Method for operating an automation system (1), comprising at least one automation plant (AA) to be controlled, installed at a plant location and also at least two control applications configured for control of the automation plant (AA), forming a part of a Cloud computing structure of which the computing resources are provided at different locations and which are connected to each other and to the automation plant (AA) for communication purposes via a network (N) that has a plurality of communication node points (KP) and communication paths (P) connecting said points to one another,
- wherein a first control application of the control applications acts as a primary (PR) and at least one second control application of the control applications as a backup (BU; BU1 - BU4),
- wherein the primary (PR) receives via the network (N) a first data packet (DP1) emanating from the automation plant comprising an input value (Ewl - Ew4) of the automation plant,
- wherein the primary (PR) processes the input value (Ewl - Ew4) in accordance with specific program instructions of a control program (P1 - P6) comprised by the control applications, at least essentially present in identical form in the primary (PR) and the backup (BU; BU1 - BU4) and creates from these an output value (Awl, Aw2) for an actuator (A) comprised by the automation plant (AA),
- wherein a second data packet (DP2) comprising the input value (Ewl - Ew4) is transmitted via the network (N) to the backup (BU; BU1 - BU4),
- wherein an enabling signal (F1, F2, ...) is transferred from the primary (PR) to the backup (BU; BU1 - BU4),
- wherein, as a result of the enabling signal (F1, F2, ...), program instructions of the control program (P1 - P6) to be processed by means of the backup (BU; BU1 - BU4) are processed that correspond to the specific program instructions already processed of the control programs (P1 - P6) to be processed by means of the primary (PR), and from these the backup (BU; BU1 - BU4) likewise creates the output value (Awl, Aw2) for the actuator (A) comprised by the automation plant (AA),
- wherein third data packets (DP3) comprising the respective output value (Awl, Aw2) are sent both from the primary (PR) and also from the backup (BU; BU1 - BU4) to the automation plant (AA) and
- wherein the third data packet (DP3) arriving first at the automation plant (AA) is used for control of the actuator (A) .

2. Method according to claim 1, wherein during operation of the automation system (1) first data packets (DP1) are created continuously by the automation plant (AA) and transferred to the primary (PR), second data packets (DP2) are created by the automation plant (AA) or the primary (PR) and transferred to the backup (BU; BU1 - BU4) and third data packets (DP3) are created by the primary (PR) and the backup (BU; BU1 - BU4) and transferred to the automation plant (AA).

3. Method according to claim 1 or 2, wherein the second data packet (DP2) comprising the input value (Ewl - Ew4) is transmitted from the primary (PR) via the network (N) to the backup (BU; BU1 - BU4).

4. Method according to claim 1 or 2, wherein the second data packet (DP2) comprising the input value (Ewl - Ew4) is transmitted from the automation plant (AA) via the network (N) to the backup (BU; BU1 - BU4).

5. Method according to one of the preceding claims, wherein a plurality of control applications acting as backup (BU; BU1 - BU4), of which the computing resources are provided at different locations and which are connected via the network (N) to the automation plant (AA) and also to the primary (PR) for communication purposes, are comprised by the automation system (1) and receive first data packets (DP1) from the automation plant (AA) or the primary (PR) and create third data packets (DP3) and transfer them to the automation plant (AA) .

6. Method according to one of the preceding claims, wherein the automation plant (AA) provides the first data packets (DP1) emanating from the automation plant (AA) with a unique sequence number in each case and the primary (PR) and also the backup (BU; BU1 - BU4) provide the third data packets (DP) corresponding to a first data packet (DP1) in each case with a sequence number corresponding to the sequence number and the automation plant (AA) recognises with the aid of a sequence number comprised by a respective third data packet (DP3) transferred to the automation plant (AA) which of the third data packets (DP3) transferred to the automation plant (AA) corresponding to a specific first data packet (DP1) is arriving first at the automation plant (AA) and further processes this data packet (DP3).

7. Method according to claim 6, wherein the automation plant (AA) ignores third data packets (DP3) with the sequence number concerned arriving subsequently after this time.

8. Method according to one of the preceding claims, wherein a transmission of the first (DP1) and/or second (DP2) and/or third (DP3) data packets between the components of the automation system (1) takes place in accordance with a PROFINET standard.

9. Method according to one of the preceding claims, wherein at least one further control application acting as a further backup (BU; BU1 - BU4) is linked into the automation system (1) as part of an update phase (AuA).

10. Method according to claim 9, wherein further backups (BU; BU1 - BU4) are linked into the automation system (AA) until such time as an abort criterion is reached.

11. Method according to claim 10, wherein it is determined with the aid of statistical methods to what extent the linking of a further backup (BU; BU1 - BU4) into the automation system (1) reduces response times able to be achieved in the automation system (1) and, depending on the result of this determination, if necessary the further backup (BU; BU1 - BU4) is linked into the automation system (1).

12. Method according to one of the preceding claims, wherein an assignment of a role of a specific control application as primary (PR) or as backup (BU; BU1 - BU4) switches during the operation of the automation system (1), in particular switches cyclically.

13. Method according to claim 12, wherein transmission times for the data packets (DP1, DP2) emanating from the automation plant (AA) and/or the data packets (DP3) received by the automation plant (AA) are determined and the role of primary (PR) is assigned depending on the transmission times determined.

14. Method according to claim 13, wherein the transmission times are determined cyclically.

15. Method according to one of the preceding claims, wherein the control applications in the automation plant (AA) carry out control functions of a programmable logic control.

16. Method according to one of the preceding claims, wherein the enabling signal (F1, F2, ...) is transferred from the primary (PR) to the backup (BU; BU1 - BU4) after a predetermined interval (Zi, i=1, 2,...) has elapsed or after the occurrence of an event (E) in each case.

17. Redundant Cloud-based control system, comprising control applications forming a part of a Cloud computing structure, of which the computing resources are provided at different locations and which are connected to each other and to an automation plant (AA) to be controlled for the purposes of communication via a network (N) that has a plurality of communication node points (KP) and communication paths (P) connecting said node points to one another, wherein the Cloud-based control system is suitable for carrying out a method according to one of claims 1 to 16.

18. Automation system (1), comprising an automation plant (AA) as well as a redundant, Cloud-based control system according to claim 17.

## Revendications

1. Procédé pour faire fonctionner un système (1) d'automatisation, comprenant au moins une installation (AA) d'automatisation à commander, installée en un emplacement d'installation, ainsi qu'au moins deux applications de commande agencées pour la commande de l'installation (AA) d'automatisation et formant une partie d'une structure informatique à nuage, dont les ressources informatiques sont prévues en des emplacements différents et qui sont reliées en technique de communication entre elles et avec l'installation (AA) d'automatisation par un réseau (N), qui a une pluralité de points (KP) nodaux de communication et de chemins (P) de communication reliant ceux-ci entre eux,
- dans lequel une première application de commande parmi les applications de commande opère en tant que primaire (PR) et au moins une deuxième application de commande parmi les applications de commande opère en tant que backup (BU ; BU1 - BU4),
- dans lequel la primaire (PR) reçoit, par le réseau (N), un premier paquet (DP1) de données provenant de l'installation d'automatisation et comprenant une valeur (Ew1 - Ew4) d'entrée de l'installation d'automatisation,
- dans lequel la primaire (PR) traite la valeur (Ew1 - Ew4) d'entrée suivant des instructions d'un programme (P1 - P6) de commande déterminé, contenues dans les applications de commande et se présentant sous une forme identique, au moins sensiblement dans la primaire (PR) et dans la backup (BU ; BU1 - BU4) et en produit une valeur (Aw1, Aw2) de sortie pour un actionneur (A) contenu dans l'installation (AA) d'automatisation,
- dans lequel on transmet, par le réseau (N) à la backup (BU ; BU1 - BU4), un deuxième paquet (DP2) de données contenant la valeur (Ew1 - Ew4) d'entrée,
- dans lequel on transmet une validation (F1, F2, ...) de la primaire (PR) à la backup (BU ; BU1 - BU4),
- dans lequel, sur la base de la validation (F1, F2, ...), on traite des instructions du programme (P1 - P6) de commande à traiter au moyen de la backup (BU ; BU1 - BU4), qui correspondent aux instructions déterminées déjà traitées du programme (P1 - P6) de commande à traiter au moyen de la primaire (PR), et la backup (BU ; BU1 - BU4) en produit également la valeur (Aw1, Aw2) de sortie pour l'actionneur (A) contenu dans l'installation (AA) d'automatisation,
- dans lequel on envoie des troisièmes paquets (DP3) de données contenant la valeur (Aw1, Aw2) de sortie respective, tant de la primaire (PR) qu'également de la backup (BU ; BU1 - BU4) à l'installation (AA) d'automatisation, et
- dans lequel on utilise, pour la commande de l'actionneur (A), le troisième paquet (DP3) de données entrant dans l'installation (AA) d'automatisation.

2. Procédé suivant la revendication 1, dans lequel on produit, pendant un fonctionnement du système (1) d'automatisation en continu, on produit des premiers paquets (DP1) de données par l'installation (AA) d'automatisation et on les envoie à la primaire (PR), on produit des deuxièmes paquets (DP2) de données par l'installation (AA) d'automatisation ou par le primaire (PR) et on les envoie à la backup (BU ; BU1 - BU4), et on produit des troisièmes paquets (DP3) de données par la primaire (PR) et par la backup(BU ; BU1 - BU4) et on les transmet à l'installation (AA) d'automatisation.

3. Procédé suivant la revendication 1 ou 2, dans lequel on transmet le deuxième paquet (DP2) de données, contenant la valeur (Ew1 - Ew4) d'entrée, de la primaire (PR) à la backup (BU ; BU1 - BU4) par le réseau (N).

4. Procédé suivant la revendication 1 ou 2, dans lequel on transmet le deuxième paquet (DP2) de données, contenant la valeur (Ew1 - Ew4) d'entrée, de l'installation (AA) d'automatisation à la backup (BU ; BU1 - BU4) par le réseau (N).

5. Procédé suivant l'une des revendications précédentes, dans lequel une pluralité d'applications de commande, qui travaillent en backup (BU ; BU1 - BU4), dont les ressources informatiques sont prévues en des emplacements différents et qui sont reliées en technique de communication par le réseau (N) avec l'installation (AA) d'automatisation ainsi qu'avec la primaire (PR), sont contenues dans le système (1) d'automatisation et des premiers paquets (DP1) de données sont reçus par l'installation (AA) d'automatisation ou par la primaire (PR) et des troisièmes paquets (DP3) de donnés sont produits et sont transmis à l'installation (AA) d'automatisation.

6. Procédé suivant l'une des revendications précédentes, dans lequel l'installation (AA) d'automatisation munit les premiers paquets (DP1) de donnés issus de l'installation (AA) d'automatisation respectivement d'un numéro de séquence univoque et la primaire (PR) ainsi que la backup (BU ; BU1 - BU4) munissent les troisièmes paquets (DP) de données correspondant à un premier paquet (DP1) de données respectivement d'un numéro de séquence correspondant au numéro de séquence et l'installation (AA) d'automatisation détecte, à l'aide d'un numéro de séquence, contenu dans le troisième paquet (DP3) de données transmis respectivement à l'installation (AA) d'automatisation, celui des troisièmes paquets (DP3) de données, correspondant à un premier paquet (DP1) de données déterminé et transmis à l'installation (AA) d'automatisation, qui entre en premier dans l'installation (AA) d'automatisation et continue à traiter ce paquet (DP3) de données.

7. Procédé suivant la revendication 6, dans lequel l'installation (AA) d'automatisation néglige des troisièmes paquets (DP3) de données arrivant ensuite dans le temps et ayant le numéro de séquence concerné.

8. Procédé suivant l'une des revendications précédentes, dans lequel la transmission des premiers (DP1) et/ou deuxièmes (DP2) et/ou troisièmes (DP3) paquets de données entre les composants du système (1) d'automatisation s'effectuent suivant une norme PROFINET.

9. Procédé suivant l'une des revendications précédentes, dans lequel au moins une autre application de commande travaillant comme autre backup (BU ; BU1 - BU4) est, dans le cadre d'une phase (AuA) de surdonnées, intégrée au système (1) d'automatisation.

10. Procédé suivant la revendication 9, dans lequel on intègre d'autres backups (BU ; BU1 - BU4) au système (AA) d'automatisation, jusqu'à atteindre un critère de rupture.

11. Procédé suivant la revendication 10, dans lequel on détermine, au moyen de méthodes statistiques, dans quelle mesure l'intégration d'une autre backup (BU ; BU1 - BU4) au système (1) d'automatisation réduit des temps de réponse pouvant être atteints dans le système (1) d'automatisation et, en fonction du résultat de cette détermination, on intègre, le cas échéant, l'autre backup (BU ; BU1 - BU4) au système (1) d'automatisation.

12. Procédé suivant l'une des revendications précédentes, dans lequel on alterne, en particulier cycliquement, une affectation d'un rôle d'une application de commande déterminée comme primaire (PR) ou comme backup (BU ; BU1 - BU4) pendant le fonctionnement du système (1) d'automatisation.

13. Procédé suivant la revendication 12, dans lequel on détermine des temps de transmission des paquets (DP1, DP2) de données issus de l'installation (AA) d'automatisation et/ou des paquets (DP3) de données reçus par l'installation (AA) d'automatisation et l'affectation des rôles primaires (PR) s'effectue en fonction des temps de transmission déterminés.

14. Procédé suivant la revendication 13, dans lequel on détermine les temps de transmission cycliquement.

15. Procédé suivant l'une des revendications précédentes, dans lequel les applications de commande exécutent, dans l'installation (AA) d'automatisation, des fonctions de commande d'un automate programmable.

16. Procédé suivant l'une des revendications précédentes, dans lequel on transmet la validation (F1, F2, ...) par la primaire (PR) à la backup (BU ; BU1 - BU4) respectivement après l'écoulement d'un intervalle (Zi, i = 2, 2, ...) de temps donné à l'avance ou après l'apparition d'un événement (E).

17. Système de commande redondant, reposant sur un nuage, comprenant une partie d'une application de commande formant une structure informatique de nuage, dont les ressources informatiques sont prévues en des emplacements différents et qui sont reliées en technique de communication entre elles et avec une installation (AA) d'automatisation à commander par un réseau (N), qui a une pluralité de points (KP) nodaux de communication et des chemins (P) de communication reliant ceux-ci entre eux, dans lequel le système de commande reposant sur le nuage est propre à effectuer un procédé suivant l'une des revendications 1 à 16.

18. Système (1) d'automatisation comprenant une installation (AA) d'automatisation ainsi qu'un système de commande redondant, reposant sur un nuage, suivant la revendication 17.
